# EUROPEAN PATENT SPECIFICATION

(11) **EP 4 552 420 B1**
(45) Date of publication and mention of the grant of the patent: **18.03.2026**
(21) Application number: 23768936.9
(22) Date of filing: 06.07.2023
(51) Int. Cl.: H04W 72/1268, H04W 72/21, H04W 72/566, H04W 72/232, H04W 72/512

(54) **LOGICAL CHANNEL DATA ASSIGNMENTS FOR MULTIMODAL SYNCHRONIZED COMMUNICATIONS**
LOGISCHE KANALDATENZUWEISUNGEN FÜR MULTIMODALE SYNCHRONISIERTE KOMMUNIKATION
ATTRIBUTIONS DE DONNÉES DE CANAL LOGIQUE POUR DES COMMUNICATIONS SYNCHRONISÉES MULTIMODALES

(30) Priority: 06.07.2022 US 202263367778 P
(43) Date of publication of application: 14.05.2025
(73) Proprietor: Lenovo (Singapore) Pte. Ltd., New Tech Park 556741 (SG)
(72) Inventor: LOHR, Joachim, 65203 Weisbaden (DE); MALLICK, Prateek Basu, 63303 Dreiech (DE); KUCHIBHOTLA, Ravi, Chicago, Illinois 60680 (US)
(74) Representative: Openshaw & Co.
(86) International application number: PCT/IB2023/057005
(87) International publication number: WO 2024/009261

(56) References cited:
- US-A1- 2019 116 582
- "3rd Generation Partnership Project; Technical Specification Group Services and System Aspects; Study on supporting tactile and multi-modality communication services; Stage 1 (Release 18)", no. V18.2.0, 1 April 2022 (2022-04-01), pages 1 - 35, XP052145299, Retrieved from the Internet <URL:https://ftp.3gpp.org/Specs/archive/22_series/22.847/22847-i20.zip 22847-i20.doc> [retrieved on 20220401]

## Description

### TECHNICAL FIELD

The present disclosure relates to wireless communications, and more specifically to wireless communications scheduling to synchronize multi-sensory communication.

### BACKGROUND

A wireless communications system may include one or multiple network communication devices, including base stations, which may be otherwise known as an eNodeB (eNB), a next-generation NodeB (gNB), or other suitable terminology. Each network communication device, such as a base station, may support wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers). Additionally, the wireless communications system may support wireless communications across various radio access technologies including third generation (3G) radio access technology, fourth generation (4G) radio access technology, fifth generation (5G) radio access technology, and other suitable radio access technologies beyond 5G.

A UE can communicate with a gNB to support extended Reality (XR) features. XR refers to all real-and-virtual combined environments and human-machine interactions generated by computer technology and wearables. XR is an umbrella term for different types of realities including Virtual reality (VR), Augmented reality (AR), and Mixed reality (MR), and the areas interpolated among them. The levels of virtuality range from partially sensory inputs to fully immersive VR. A key aspect of XR is the extension of human experiences especially relating to the senses of existence (represented by VR) and the acquisition of cognition (represented by AR).

US2019116582A1 discloses a wireless transmit/receive unit (WTRU) in communication with a wireless communication network. The WTRU receives a configuration which includes one or more characteristics for one or more transmission modes (TMs) of the WTRU. The WTRU selects, dynamically, at least one TM of the one or more TMs for a transmission of an uplink data unit, the dynamic selection being based on one or more data transfer requirements and the one or more TM characteristics. The WTRU identifies at least one transport channel associated with the at least one TM, and maps the uplink data unit to the at least one transport channel. The WTRU sends the transmission of the uplink data unit to one or more devices of the wireless communication network.

3rd Generation Partnership Project; Technical Specification Group Services and System Aspects; Study on supporting tactile and multi-modality communication services; Stage 1 (Release 18), 3GPP TR 22.847 V18.2.0 (2022-03), provides stage 1 use cases and potential 5G requirements on supporting tactile and multi-modal communication services.

### SUMMARY

The invention is defined by the appended independent claims.

The present disclosure relates to methods, apparatuses, and systems that provides wireless communication by a user device with reduced jitter for multimodal, latency-sensitive data such as extended Reality (XR) traffic that is multi-sensory. For a positive user experience, multimodal XR applications may require arrival of synchronized parallel media streams to a user. The parallel media streams may be different modes of multimodal traffic. In an example, the different modes each support one of the five human senses (e.g., sight, hearing, touch, smell, and taste). In an example, the XR application may support cloud gaming. The disclosure provides different solutions, described in various embodiments, for enhancing the logical channel prioritization (LCP) procedure to address quality of service (QoS) of an XR application. A user device considers inter-dependencies of each mode of the XR application. In particular, the user device determines an order for multiplexing data of different LCHs into allocated resources of an uplink medium access channel (MAC) PDU, as a transport block (TB). To allow for improved uplink resource allocation targeting multimodal XR applications, the present disclosure introduces new information that describes relationship information between different packet data unit (PDU) sets of different logical channels (LCHs). The new information is provided to the access stratum, e.g., to a base station and to a user device. Furthermore, the present disclosure provides enhanced LCP procedures in the various different embodiments.

Some implementations of the method and apparatuses described herein may include receiving, via a transceiver of a user device, multimodal traffic having stringent end-to-end latency, jitter, and synchronization requirements. The method includes receiving, by the transceiver of the user device on a downlink from a network device, one or more control messages containing and uplink resources allocation grant and a logical channel configuration for more than one logical channels. The more than one logical channels belong to one logical channel group. The logical channel configuration includes a priority value for each logical channel of the more than one logical channels and includes a ratio for each of the more than one logical channels. The method includes determining an amount of multi-modal traffic buffered in one or more uplink buffers for the more than one logical channels of the logical channel group. The multi-modal traffic is inter-dependent and requires synchronized communication. The method includes assigning, on a medium access control layer, resources allocated by the uplink grant to each of the more than one logical channels of the logical channel group, according to the ratio associated with each of the more than one logical channels and the determined amount of data buffered for the more than one logical channels. The method includes transmitting, by the transceiver to the network device, a multiplexed uplink signal containing the multi-modal traffic of the more than one logical channels, utilizing the uplink resource allocation grant.

Some implementations of the method and apparatuses described herein may further include a network device that incorporates, or a method that provides for, wireless communication with reduced jitter for latency-sensitive multimodal traffic or data in an uplink signal from a user device. The method includes transmitting, by the transceiver on a downlink to the user device, one or more control messages containing an uplink resource allocation grant and a logical channel configuration for more than one logical channels. The more than one logical channels belong to one logical channel group. The logical channel configuration includes a priority value for each logical channel of the more than one logical channels and a ratio for each of the more than one logical channels. The one or more control messages prompt the user device to determine an amount of multi-modal traffic buffered in one or more uplink buffers for the more than one logical channels of the logical channel group. The multi-modal traffic is inter-dependent and requires synchronized communication. The one or more control messages prompt the user device to assign, on a medium access control layer, resources allocated by the uplink grant to each of the more than one logical channels of the logical channel group, according to the ratio associated with each of the more than one logical channels and the determined amount of data buffered for the more than one logical channels. The method includes receiving, by the transceiver from the user device, a multiplexed uplink signal containing the multi-modal traffic of the more than one logical channels, utilizing the uplink resource allocation grant.

### BRIEF DESCRIPTION OF THE DRAWINGS

**FIG. 1** illustrates an example of a wireless communications system enabling wireless communication that supports a logical channel procedure (LCP) that is enhanced for multimodal traffic, such as multiple-sensory extended Reality (XR) traffic, in accordance with aspects of the present disclosure.
**FIG. 2** presents a communication diagram of a downlink and an uplink that illustrate aspects of a logical channel prioritization (LCP) procedure that considers inter-dependencies of multimodal traffic that require synchronous communication, in accordance with aspects of the present disclosure.
**FIG. 3** illustrates a graphical plot of an amount of multimodal traffic or data buffered in respective logical channels of different assigned priorities, in accordance with aspects of the present disclosure.
**FIG. 4** illustrates an example graphical plot of an initial implementation of the LCP procedure addressing strict delay requirements of logical channels carrying latency-sensitive multimodal traffic, in accordance with aspects of the present disclosure.
**FIG. 5** illustrates an example graphical plot of a subsequent implementation of the LCP procedure addressing strict delay requirements of logical channels carrying latency-sensitive multimodal traffic, in accordance with aspects of the present disclosure.
**FIG. 6** illustrates an example graphical plot in which the logical channel prioritization procedure is used to begin assignment of traffic or data, in accordance with aspects of the present disclosure.
**FIG. 7** illustrates an example graphical plot in which the logical channel prioritization procedure is used to complete assignment of traffic or data, in accordance with aspects of the present disclosure.
**FIG. 8** illustrates an example of a block diagram of a user device that supports wireless communication with a network device by multiplexing inter-dependent, multimodal traffic in an uplink signal, in accordance with aspects of the present disclosure.
**FIG. 9** illustrates an example of a block diagram of a network device that supports scheduling and receiving wireless communication that includes the uplink signal of multiplexed inter-dependent, multimodal traffic from the user device, in accordance with aspects of the present disclosure.
**FIG. 10** illustrates a flowchart of a method performed by a user device that supports wireless communication of multiplexed multimodal traffic to meet synchronization requirements, in accordance with aspects of the present disclosure.
**FIG. 11** illustrates a flowchart of a method performed by a network device that supports wireless communication of multiplexed multimodal traffic to meet synchronization requirements, in accordance with aspects of the present disclosure.

### DETAILED DESCRIPTION

As an example of multimodal traffic, extended reality (XR) traffic may include different channels for more than one human sense. The multimodal traffic is communicated between a radio access network (RAN) and a user equipment (UE) over an air interface. The multimodal traffic is associated with a packet delay budget (PDB). The PDB is a limited time budget for a data packet to be transmitted over the air from a base node to the UE or from the UE to the base node. A delay budget can be also defined for an Application Data Unit (ADU). An ADU is the smallest unit of data that can be processed independently by an application, such as processing for handling out-of-order traffic data.

Virtual Reality (VR) is a rendered version of a delivered visual and audio scene. The rendering is designed to mimic the visual and audio sensory stimuli of the real world as naturally as possible to an observer or user as they move within the limits defined by the application. Augmented reality (AR) provides a user with additional information, artificially generated items, or content overlaid upon their current environment. Mixed reality (MR) is an advanced form of AR where some virtual elements are inserted into the physical scene with the intent to provide the illusion that these elements are part of the real scene.

In the field of video compression, a video frame is compressed using different algorithms with different advantages and disadvantages, centered mainly around the amount of data compression. These different algorithms for video frames are called picture types or frame types. The three major picture types used in the different video algorithms are I, P and B. The picture types are different in the following characteristics: (i) Intra-coded (I)-frames are the least compressible but don't require other video frames to decode; (ii) Predicted (P)-frames can use data from previous frames to decompress and are more compressible than I-frames; and (iii) Bi-directional predicted (B)-frames can use both previous and forward frames for data reference to get the highest amount of data compression. XR traffic has a number of characteristics, including: (i) variable packet arrival rate: packets coming at 30 - 120 frames/second, with some jitter; (ii) packets having variable and large packet size; (iii) B/P-frames being dependent on I-frames; and (iv) presence of multiple traffic/data flows such as pose and video scene in uplink. A delay budget for video frame ADUs is especially important in XR traffic because of decoding requirements of video content. A video frame can be an I-frame, P-frame, or can be composed of I-slices, and/or P-slices. I-frames/I-slices are more important and larger than P-frames/P-slices. The importance is related to impact of late traffic on the ability to successfully decode and use the traffic.

The latency requirement of XR traffic in RAN side (i.e., air interface) is modelled as packet delay budget (PDB). The PDB is a limited time budget for a packet to be transmitted over the air from a gNB to a UE. A delay budget can be also defined for set of PDUs, e.g., referred to as PDU set or an ADU (application data unit), referred to as "ADB".

If the scheduler, and/or the UE is aware of delay budgets for a packet/ADU, the gNB can take this knowledge into account in scheduling transmissions. In an example, the gNB may give priority to transmissions close to their delay budget limit. The UE may also take advantage of such knowledge to more efficiently manage an uplink transmission by dropping data that has exceeded a corresponding delay budget. In an example, an uplink transmission such as a physical uplink control channel (PUCCH) in response to physical downlink shared channel (PDSCH), uplink (UL) pose, or physical uplink shared channel (PUSCH) corresponding to a transmission that exceeds its delay budget can be dropped. In addition, the scheduler and/or UE do not have to wait for re-transmission of a PDSCH and do not need to keep the erroneously received PDSCH in buffer for soft combining with a re-transmission that will never occur.

Legacy end user applications usually consist of a single traffic flow directed at a single device. However, emerging use cases such as AR/VR and holographic communications ("multimodal traffic") are expanding this process to encompass multiple simultaneous traffic flows where the arrival of packets must be synchronized. Incorporating more than one of the five human senses in the XR experience necessitates more stringent end-to-end latency, jitter, and synchronization. Co-existing AR and VR capabilities in the same device leads to the concept of MR, which is a sort of mid-point in the virtual-real spectrum. With the evolution of 3D imaging, MR is evolving to create the highly sought-after holographic teleportation concept. Subsequently, such services have even more stringent requirements on the wireless network since holographic flows require very tight synchronization of the five senses. Therefore, when designing 5G new radio (NR) enhancements to support eXtended reality (XR) applications, it is important to consider multimodal interaction techniques, which employ several human senses simultaneously. Multimodal interaction can transform how people communicate remotely, practice for tasks, entertain themselves, process information visualizations, and make decisions based on the provided information.

For XR applications transmitted via a mobile communication system like NR, the interactions between different input signals can be translated to some inter-dependencies between transmissions of different bearers/LCHs/flows. In an example, quality of service (QoS) requirement(s) are needed for XR at the PDU set and ADU level. In particular, multimodal dependency between different QoS flows is needed. These new emerging XR services will require synchronized parallel media streams to arrive to the user for a proper service experience. For multi-modal services like tactile/haptic communications, this includes different types of streams, i.e., different service streams corresponding to different human senses. Such service streams may originate from different points in the network. And finally, the different service streams may be destined to multiple endpoint devices in different locations but synchronized, nonetheless.

Conventional specific logical channel prioritization (LCP) procedure is based on statically configured parameters, such as logical channel priority. However, those static prioritization rules may not be sufficient to satisfy strict latency requirements of multimodal applications. Multimodal XR applications, for example, require synchronized parallel media streams to arrive to the user for a proper service experience. These inter-dependencies and relationships between data of different LCHs is conventionally not considered within the LCP procedure. With conventional implementations, the access stratum, e.g., gNB and UE, is not able to identify the XR or cloud gaming traffic and cannot distinguish the different traffic types of these services to carry out any optimization. Hence, an awareness about these types of traffics (e.g., at gNB and UE) could be very beneficial for the scheduling and to the link adaptation to meet the latency and the reliability required for the service, while guaranteeing good system capacity.

The present disclosure provides different solutions described in various embodiments for enhancing the LCP procedure in order to address the QoS of XR applications. The UE/MAC entity considers inter-dependencies between data of different LCHs in order to distribute scheduled uplink resources among different LCHs. To allow for an improved uplink resource allocation mechanism targeting multimodal XR applications, new information comprised of relationship information between different PDU sets of different LCHs is provided to the Access stratum (gNB and UE). Furthermore, new LCP procedures are proposed in the different embodiments. The solutions outlined in the various embodiments ensure that tight synchronization requirements of inter-related data bursts of multimodal XR applications are met.

In one embodiment, the UE uses a new LCP procedure for distributing scheduled uplink resources among a set of LCHs. Specifically, the UE assigns traffic to the MAC layer using a new parameter configured for a LCH belonging to a group of LCHs for the allocation of UL resources. This new parameter specifies a percentage or relative amount of resources that the LCH should be allocated from scheduled uplink resources during LCP procedure. A main principle of this new LCP procedure is that the network device can explicitly control how scheduled uplink resources are shared among a group of LCHs.

In another embodiment, a DCI allocating uplink resources for an initial transmission indicates, within a field, whether the UE should use the new LCP mechanism for the MAC layer. The new LCP mechanism uses a ratio or share parameter configured for an LCH/bearer to determine the amount of UL resources being allocated to the LCHs. The DCI indicates whether the UE manages the MAC layer using one of the new LCP procedures or reverts to a legacy LCP procedure that utilizes priority of the LCs.

Latency-sensitive traffic arriving after expiration of the remaining delay budget may not be usable, degrading presentation of content, for example, and thus reduces a user experience. As utilized herein, user experience refers to the overall performance sense experienced by a user of the communication device or periphery device when using a product, application, system, or service. Within the context of the disclosure, user experience is a broad term that can cover anything from how well the user can navigate the product, how easy the device or product is to use, how relevant the content displayed is, etc. Some immersive user interfaces, such XR displays, have demanding communication requirements. User experience is reduced when the presentation of images is noticeably degraded due to inadequate data throughput or excessive data latency.

The present disclosure provides solutions that may be used individually, or in combination, to enhance the LCP procedure for latency-sensitive traffic, such as for an XR application. The enhanced LCP procedure maintains a quality of service (QoS) required for the latency-sensitive traffic, while retaining a capability to revert back to logical channel priorities A medium access control (MAC) entity at a user device("UE/MAC") considers the remaining delay budget associated with the traffic or data of a logical channel (LCH) being available for an initial transmission to determine an order for multiplexing priority in a transport block (TB) on MAC layer. For latency-sensitive data, logical channel priority is only considered for cases when the remaining delay budget is the same for more than one LCH.

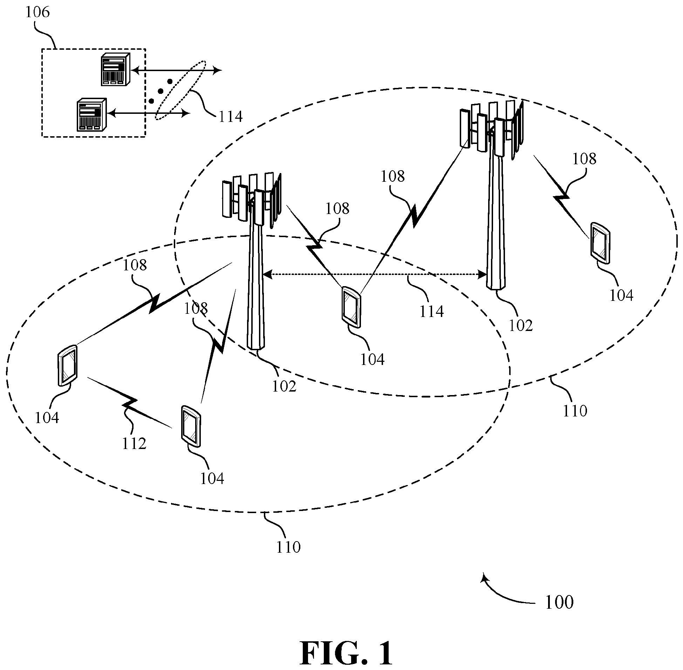

**FIG. 1** illustrates an example of a wireless communications system **100** enabling wireless communication that supports an LCP enhanced for latency-sensitive traffic such as XR traffic, in accordance with aspects of the present disclosure. The wireless communications system **100** may include one or more base stations **102,** one or more UEs **104,** and a core network 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a 5G network, such as a New Radio (NR) network. In other implementations, the wireless communications system 100 may be a combination of a 4G network and a 5G network. The wireless communications system 100 may support radio access technologies beyond 5G. Additionally, the wireless communications system 100 may support technologies, such as time division multiple access (TDMA), frequency division multiple access (FDMA), or code division multiple access (CDMA), etc.

The one or more base stations 102 may be dispersed throughout a geographic region to form the wireless communications system 100. One or more of the base stations 102 described herein may be, may include, or may be referred to as a base transceiver station, an access point, a NodeB, an eNodeB (eNB), a next-generation NodeB (gNB), a network device, or other suitable terminology. A base station 102 and a UE 104 may communicate via a communication link 108, which may be a wireless or wired connection. For example, a base station 102 and a UE 104 may wirelessly communicate over a user to user (Uu) interface.

A base station 102 may provide a geographic coverage area 110 for which the base station 102 may support services (e.g., voice, video, packet data, messaging, broadcast, etc.) for one or more UEs 104 within the geographic coverage area 110. For example, a base station 102 and a UE 104 may support wireless communication of signals related to services (e.g., voice, video, packet data, messaging, broadcast, etc.) according to one or multiple radio access technologies. In some implementations, a base station 102 may be moveable, for example, a satellite associated with a non-terrestrial network. In some implementations, different geographic coverage areas 110 associated with the same or different radio access technologies may overlap, but the different geographic coverage areas 110 may be associated with different base stations 102. Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The one or more UEs **104** may be dispersed throughout a geographic region of the wireless communications system **100.** A UE **104** may include or may be referred to as a mobile device, a wireless device, a remote device, a handheld device, or a subscriber device, or some other suitable terminology. In some implementations, the UE **104** may be referred to as a unit, a station, a terminal, or a client, among other examples. Additionally, or alternatively, the UE **104** may be referred to as an Internet-of-Things (IoT) device, an Internet-of-Everything (IoE) device, or machine-type communication (MTC) device, among other examples. In some implementations, a UE **104** may be stationary in the wireless communications system **100.** In some other implementations, a UE **104** may be mobile in the wireless communications system **100.**

The one or more UEs **104** may be devices in different forms or having different capabilities. Some examples of UEs **104** are illustrated in **FIG. 1****.** A UE **104** may be capable of communicating with various types of devices, such as the base stations **102,** other UEs **104,** or network equipment (e.g., the core network **106,** a relay device, an integrated access and backhaul (IAB) node, or another network equipment), as shown in **FIG. 1****.** Additionally, or alternatively, a UE **104** may support communication with other base stations **102** or UEs **104,** which may act as relays in the wireless communications system **100.**

In the description that follows, the timing of transmissions and retransmissions of control channels and data channels supports latency and/or error rate requirements for portions of video frames and may be referred to as time units. Time units, such as a symbol, slot, subslot, and transmission time interval (TTI), can have a particular duration. In an example, a symbol could be a fraction or percentage of an orthogonal frequency division multiplexing (OFDM) symbol length associated with a particular subcarrier spacing (SCS). In another example, an uplink (UL) transmission burst can be comprised of multiple transmissions. The multiple transmission can have the same priority, different priorities, or may have no associated priority. The multiple transmissions may include gaps between the transmissions that are short enough in duration to not necessitate performing a channel sensing or listen before transmit (LBT) operation between the transmissions.

A UE **104** may also be able to support wireless communication directly with other UEs **104** over a communication link **112.** For example, a UE **104** may support wireless communication directly with another UE **104** over a device-to-device (D2D) communication link. In some implementations, such as vehicle-to-vehicle (V2V) deployments, vehicle-to-everything (V2X) deployments, or cellular-V2X deployments, the communication link **112** may be referred to as a sidelink. For example, a UE **104** may support wireless communication directly with another UE **104** over a PC5 interface. PC5 refers to a reference point where the UE **104** directly communicates with another UE **104** over a direct channel without requiring communication with the base station **102.**

A base station **102** may support communications with the core network **106,** or with another base station **102,** or both. For example, a base station **102** may interface with the core network **106** through one or more backhaul links **114** (e.g., via an S1, N2, or another network interface). The base stations **102** may communicate with each other over the backhaul links **114** (e.g., via an X2, Xn, or another network interface). In some implementations, the base stations **102** may communicate with each other directly (e.g., between the base stations **102).** In some other implementations, the base stations **102** may communicate with each other indirectly (e.g., via the core network **106).** In some implementations, one or more base stations **102** may include subcomponents, such as an access network entity, which may be an example of an access node controller (ANC). An ANC may communicate with the one or more UEs **104** through one or more other access network transmission entities, which may be referred to as a radio heads, smart radio heads, or transmission-reception points (TRPs).

The core network **106** may support user authentication, access authorization, tracking, connectivity, and other access, routing, or mobility functions. The core network **106** may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, SMM920220045-EP-EPT authentication, and bearer management for the one or more UEs **104** served by the one or more base stations **102** associated with the core network **106.**

Some implementations of the method and apparatuses described herein may further include signaling or a handshake between a base node, such as base stations **102,** and a user device, such as UEs **104,** that indicate which transport blocks (TBs) are associated with a packet and/or an application data unit (ADU). In an example, the signaling or handshake can be downlink control information (DCI) indication or a medium access control (MAC) control element (CE) indication. In one or more embodiments, the base node and device can use a priority indication for priority of particular types of video transmission. In an example, I-frame/I-slice can have high priority and P-frame/P-slice may have low priority.

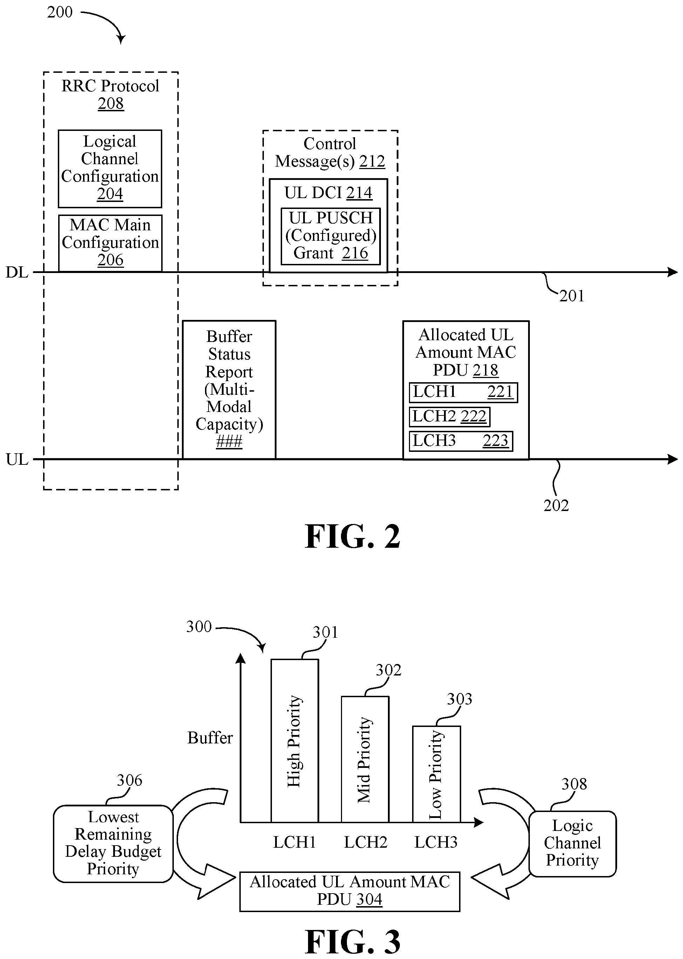

**FIG. 2** presents communication diagram **200** of a downlink **201** and an uplink **202** that illustrate aspects of a logical channel prioritization (LCP) procedure that considers remaining delay budget (RDB) and/or packet delay budget (PDB). The downlink **201** includes a logical channel configuration message **204** and a medium access control (MAC) main configuration message **206** as part of radio resource control (RRC) protocol **208** that establish the data communication. The uplink **202** includes periodic buffer status reports **210** that indicate an amount of traffic or data that requires an uplink allocation. The buffer status reports **210** may indicate a multiplex capacity to support synchronous communication of multimodal traffic or data, such as multi-sensor XR traffic, on the uplink **202.** The buffer status reports **210** may alternatively not indicate a multiplex capacity when latency-sensitive data is not buffered, prompting for reversion to multiplexing traffic or data on the uplink **202** based on logical channel priorities. Control message(s) **212** on the uplink **202** can include uplink (UL) downlink control information (DCI) **214,** such as an UL PUSCH Grant **216** defining an allocated UL amount MAC PDU **218** to carry portions of a first logical channel (LCH1) **221,** a second logical channel (LCH2) **222,** and a third logical channel (LCH3) **223.**

**FIG. 3** presents a graphical plot **300** of an amount of traffic or data buffered in respective logical channels of different assigned priorities. Portions of the traffic or data are assigned to an allocated uplink amount MAC PDU ("grant") **304.** For clarity, the following three LCHs are depicted, each having an assigned priority: (i) first logical channel (LCH1) **301,** which is assigned a highest priority (e.g., priority = 1); (ii) second logical channel (LCH2) **302,** which is assigned a mid-priority (e.g., priority = 2); and (iii) third logical channel (LCH3) **303,** which is assigned a lowest priority (e.g., priority = 3). Traffic or data buffered in LCH 1 **301,** LCH2 **302,** and LCH3 **303** are assigned to a MAC PDU allocated by an uplink grant **304.** In particular, the traffic or data is assigned according to either a lowest RDB priority **306** or according to LCH priority **308** depending upon the presence of latency-sensitive data (e.g., XR traffic).

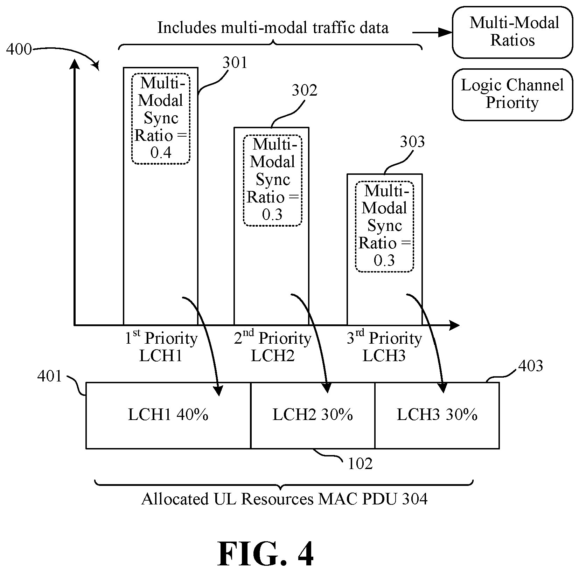

**FIG. 4** presents an example graphical plot **400** of an implementation of the LCP procedure addressing strict delay requirements of data radio bearer(s) DRB(s)/LCH(s) multimodal traffic or data, such as multi-sensory XR traffic/applications, which are also referred to as XR bearers/LCHs. To provide for multimodal synchronization, LCH1 **301** is assigned a ratio of 0.4, LCH2 **302** is assigned a ratio of 0.3, and LCH**1 304** is assigned a ratio of 0.4. The ratio is selected based the relative amount of traffic or data provided by each mode of traffic as compared to the other modes. With all of the LCHs **301 - 303** containing multimodal traffic, respective portions **401, 402,** and **403** of each LCH **301 - 303** are assigned to allocated UL resource MAC PDU (grant **304)** according to priority of the respective LCH **301 - 303,** in an amount relative to the assigned ratio for the corresponding LCH **301 - 303.**

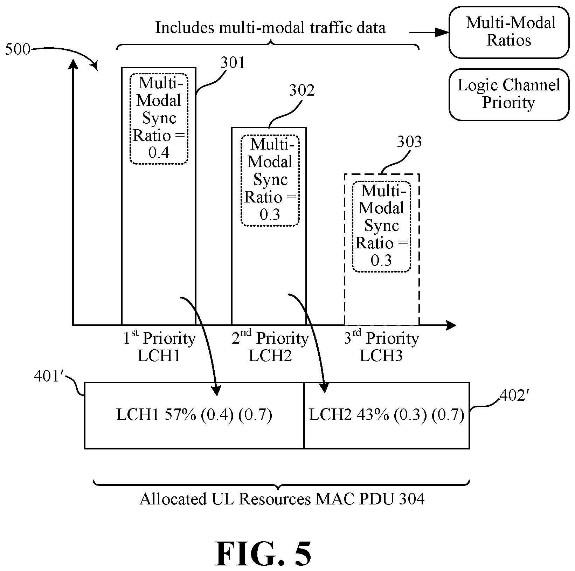

**FIG. 5** presents another example graphical plot **500** of an implementation of the LCP procedure addressing strict delay requirements of LCH(s)/DRB(s) multimodal traffic or data, such as multi-sensory XR traffic/applications. The priority and ratios for LCH **301** - **303** are as provided for **FIG. 4****;** however, LCH3 **303** is not buffering any traffic or data that requires multimodal synchronization. In an example, an audio channel may be muted while visual and tactile channels continue to stream. With only two of the LCHs **301 - 303** containing multimodal traffic, the ratios LCH **301 - 302** are normalized so that assignment to allocated UL resource MAC PDU **304** is fully utilized. The assigned ratio for the corresponding LCHs **301** - **302** results in scaled portions **401'** and **402'** that are respectively first 57% of LCH **301** and then 43% of LCH2 **302.**

In one or more embodiments, the LCP procedure retains a capability to revert to LCH prioritization when latency-sensitive data is not present. In particular, when operating the LCP procedure in this reverted mode, "normal" data that is less latency sensitive than XR traffic is buffered and available for uplink transmission. The LCP procedure reverts to considering that the priority of LCHs that are entitled to multiplex data onto uplink resources. The resources are allocated by an uplink resource allocation (grant) according to their logical channel priority. The set of LCHs that is allowed to map data to an UL resource is determined by the configured LCH restrictions. In particular, only those LCHs that are satisfying all the configured LCH restrictions are considered for the subsequent LCP/multiplexing procedure. UL resources are allocated to the LCHs in a strict priority order, starting with the highest priority LCH.

For this reversion in the LCP procedure, the UE shares UL resources among the configured LCHs based on the LCH priority and the prioritized bit rate configured for an LCH. The idea behind prioritized bit rate is to support a minimum bit rate for each logical channel, including low priority bearers that are not guaranteed bit rate (GBR) bearers. The minimum bit rate avoids having low priority bearers receiving no communication service (i.e., being "starved"). Each bearer should at least get enough resources to achieve the prioritized bit rate (PBR). The LCP procedure includes an initial step of selecting the LCHs for TB generation based on the configured LCH restrictions. Thereafter, the LCP procedure is in general specified as a "two-step" procedure. In the first step, the LCHs are served (in decreasing priority order, starting with the highest priority logical channel) up to their configured PBR (implemented by means of a token bucket model). In the second step of the LCP, if any uplink resources remain (after meeting the PBR of the LCHs in the first round), all the logical channels are served in a strict decreasing priority order (regardless of the value of bucket) until either the data for that logical channel or the UL grant is exhausted.

When reverting to LC priority, the LCP procedure is, in general, specified as a "two-step" procedure, e.g., not considering the step of selecting the LCHs which are considered during the LCP procedure for TB generation based on the configured LCH restrictions. In the first step or round, the LCHs are served (in decreasing priority order starting with the highest priority logical channel) up to their configured PBR (implemented by means of a token bucket model). In the second step or round of the LCP, if any uplink resources remain (after meeting the PBR of the LCHs in the first round), all the logical channels are served in a strict decreasing priority order (regardless of the value of bucket) until either the data for that logical channel or the UL grant is exhausted. Basically, in the "second round" of the LCP procedure, the UE would first multiplex all the data of the highest priority LCH into the TB before mapping any data of the next highest priority LCHs into the same TB. Hence, the UE may multiplex only data up to the configured PBR of each LCH into a TB and the remaining uplink resources are filled only with data of the highest priority LCH. According to this embodiment, a different mechanism for the distribution of scheduled uplink resources among the LCHs is introduced. To ensure the synchronization of packet data transmission of inter-related bearers, the network, using the new parameter, configures explicitly how uplink resources are shared among LCHs that are part of a group of LCHs. In one example, when assigning data to the MAC layer, the UE does not consider the priority nor the PBR configured for a LCH in order to distribute scheduled uplink resources to the LCHs (XR LCHs/bearers).

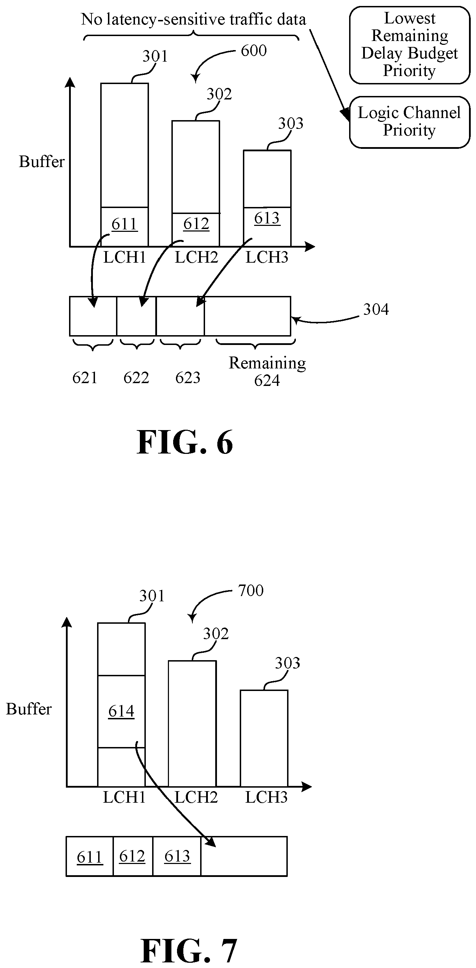

**FIG. 6** presents an example graphical plot **600** in which the logical channel prioritization procedure is used to begin assignment of traffic or data. The selection process includes the UE first selecting a first data/PDU **611** from LCH**1 301** as a first assignment **621** of UL MAC PDU **304.** Then, the UE selects a second data/PDU **612** from LCH2 **302** as a second assignment **622** of UL MAC PDU grant **304.** Then, the UE selects a third data/PDU **613** from LCH3 **303** as a third assignment **623** of UL MAC PDU grant **304,** leaving remaining assignment **624.**

**FIG. 7** presents an example graphical plot **700** in which the logical channel prioritization procedure is used to complete assignment of traffic or data. In a second pass of the selection process after selection of first, second, and third data/PDUs **611 - 613,** the UE uses LCH priority to select a corresponding amount of LCH**1301** as fourth data/PDU **614** to fill remaining assignment **624** (i.e., "fourth" assignment").

According to one embodiment, the network device configures QoS related requirements for a set of LCH or XR bearers that are inter-related and inter-dependent. In one example, a radio bearer/LCH or radio link control (RLC) bearer is linked to a set of one or more other radio bearers/LCHs/RLC bearers.

Those bearers/LCHs may, for example, carry different types of streams, e.g., corresponding to different human senses, of multi-modal services such as tactile/haptic communications. According to one implementation of this embodiment, the network device configures a QoS parameter, e.g., latency requirements or respective latency bounds, for the group of bearers/LCHs to enforce the relationship and inter-dependencies among those different bearers/LCHs. Based on a recognition that QoS requirements that are configured per bearer/LCH may not be sufficient for new emerging XR applications, the network device configures some QoS parameters or requirements for a group of inter-dependent or inter-related bearers. In one example, some latency bound for the transmission of data of two different LCH/bearers is configured to ensure some synchronization between the two bearers/LCHs. This latency bound defines, for example, the maximum latency which is tolerated between the transmission of data packets of the two bearers/LCHs. In particular, packets of a PDU set of the two bearers/LCHs should be transmitted and received within the configured delay bound. The new QoS information is signaled for a group of inter-related bearers/LCHs. In one example, the UE signals the new QoS information to the gNB to allow for an efficient downlink scheduling. Alternatively, or in addition, the gNB signals the new QoS information to the UE for the purpose of uplink resource allocation by the LCP procedure.

According to one or more embodiments, the newly defined QoS parameters are used within the LCP procedure to determine the multiplexing order and priority. Instead of a remaining delay budget or delay bound being only defined, configured, and ultimately enforced for each bearer independently, the present disclosure provides enforcing for multiple bearers or LCHs. In particular, in addition to an absolute delay bound of a data packet, a bearer/LCH may be configured with an additional relative delay bound. A delay bound is configured for the "related and inter-dependent" LCHs/bearers. During the LCP procedure, the UE not only ensures that the packets are transmitted within the configured delay bound of the bearer but also that the packets of the "related and inter-dependent" bearer are transmitted within the configured inter-bearer relative delay bound. Hence, the UE prioritizes the transmission of data of a LCHs that is close to an inter-related delay bound associated with the data. In one or more embodiments, once the transmission of data of a LCH has taken place, the UE starts a timer for the data of an inter-related bearer/LCH to track the time the inter-dependent data is pending for transmission. In one example, the UE prioritizes the inter-related data during a subsequent LCP procedure to ensure that the relative delay bound is fulfilled.

In one example, a new field in the *"Radiobearerconfig"* information element (IE) indicates the associated/inter-dependent bearer(s) of a radio bearer. For example, the *"DRBToAddMod"* IE may contain a field which refers to the *"drb-Identity"* of the associated bearers. According to another example, the *"logicalchannelconfig"* IE includes a field identifying the associated RLC bearer/LCHs.

According to one embodiment, a LCH, which is part of a (configured) group of LCHs/bearers, includes a parameter that specifies the relative amount of resources or share of scheduled uplink resources (e.g., UL grant) that should be allocated during LCP procedure. In one or more embodiments, the parameter is used to determine how scheduled uplink resources are split among the LCHs within the group of LCHs. In one example, the group of LCHs includes XR LCHs/bearers.

According to one implementation of the embodiment, the new parameter is a ratio and denotes the relative percentage of an UL grant that is allocated to an LCH. Based on the configured ratio, the MAC entity at the UE calculates the amount of resources allocated to the logical channel. When determining the amount of resources allocated to a LCH based on the configured ratio, the MAC entity at the UE considers the amount of data available for transmission for each LCH of the group of LCHs, i.e., XR bearers.

In one exemplary scenario, a UE is configured with two inter-related (XR) bearers that are part of a multi-modal application, e.g., one bearer carrying a video stream, and the other bearer carrying related audio data. Each of those two LCHs corresponding to the two inter-related XR bearers is configured with the new parameter. In an example, a ratio is used to calculate the percentage of an uplink grant that should be allocated to the LCH. In the exemplary scenario, the ratio is 0.4 for the first LCH and 0.6 for the second LCH. In case the UE receives an uplink grant that schedules 1000 bytes for XR traffic and both LCHs have data available for transmission, the first LCH is assigned 400 bytes and the second LCH is allocated 600 bytes (not considering any kind of protocol headers, etc.). Based on the configured ratio, the MAC entity at the UE determines that the first LCH is allocated 0.4 / (0.4 + 0.6) * 1000 bytes = 400 bytes, whereas the second LCH is assigned 0.6 / (0.4 + 0.6) * 1000 bytes = 600 Bytes. For the case that only the first LCH has data available for transmission, the UE calculates that the first LCH is allocated 0.4 / 0.4 * 1000 bytes = 1000 bytes.

By contrast, according to a legacy LCP procedure, for each LCH, the UE would allocate uplink resources in the first round of the LCP procedure up to the respective LCH's configured PBR value (if configured). In an example, the allocation is 100 bytes for each of the two (2) LCHs, and in the second round, the remaining 800 bytes are allocated to the highest priority LCH. Hence, by the new LCP mechanism presented according to the present embodiment, the network device can explicitly control how uplink resources are shared among a set of LCHs, ensuring that data of inter-related bearers are multiplexed into the same TB or adjacent TBs (i.e., TBs transmitted closely to each other).

In another embodiment, the UE repeats the first step of the LCP procedures to satisfy the PBR requirements of each LCH until the UL grant is exhausted. The LCHs are served (in decreasing priority order starting with the highest priority logical channel) up to their configured PBR. This process is repeated until the uplink grant is exhausted. For the subsequent round within LCP procedure, the uplink resources are allocated regardless of the bucket value of an LCH.

According to one embodiment, a DCI allocating uplink resources (UL DCI) for an initial transmission indicates, within a field, whether the MAC should use the new LCP mechanism described herein. In an example, the UL DCI indicates a ratio or share parameter is configured for an LCH/bearer to determine the amount of UL resources allocated to the LCHs. Alternatively, or in addition, the UL DCI indicates whether the MAC will use the legacy LCP procedure. In one example, the field is a one-bit flag which indicates whether the grant is intended for multimodal XR traffic. In response to receiving, at the UE, an UL DCI including a flag indicating that the uplink grant is intended for multi-modal traffic, the UE selects the LCHs that are configured with a share or ratio IE. In particular, the particular LCH belongs to a group of LCHs carrying multimodal XR traffic, and the UE only considers those LCHs for the LCP procedure that are carrying multimodal traffic. Subsequently, the MAC entity at the UE performs the LCP procedure for multimodal traffic by using the ratio value to share the allocated uplink resource among the selected LCHs.

According to one related embodiment, a configured grant configuration indicates whether the MAC entity should use (i) the new LCP mechanism to use a ratio or share parameter configured for an LCH/bearer to determine the amount of UL resources of a LCH multiplexed on the CG resources or whether the MAC entity should use (ii) the legacy LCP procedure. In one example, a new IE is signaled within the configured grant configuration which indicates, when present, that the configured grant resources are used for multimodal data such as XR traffic. The MAC entity uses the new LCP mechanism based on the ratio for the LCH to multiplex data on the configured grant resources.

According to one embodiment, the UE triggers a status report (SR) or buffer status report (BSR) for cases when the UE has no valid uplink resources and the remaining delay budget configured for a set of inter-dependent bearers is smaller than a preconfigured threshold. In order to ensure that data of inter-dependent bearers/LCHs is not exceeding the configured delay bound, e.g., packets of related bearers are transmitted within the configured delay bound, the UE triggers a status report (SR) to request uplink resources from the gNB. This new SR or buffer status report (BSR) trigger also applies to scenarios where the inter-dependent bearer has the same logical channel priority.

According to one further embodiment, the network provides some information including relationship information among data of different inter-related bearers/LCH to the UE that are used for the uplink resource allocation for the LCP procedure. According to one embodiment, the relation information includes relationship information among PDU sets of different inter-related bearers/LCHs. In one example, the network provides information to the UE about inter-related PDU sets of different LCH/bearers that is used for the MAC by the UE during the LCP procedure. In one specific example, the network provides the identity of inter-related PDU sets of different (inter-related) bearers/LCHs that are carrying data of a multi-modal XR application. The relationship information is used during the LCP procedure when granted uplink resources are shared among the LCHs. For example, when the network indicates that the PDUs within two PDU sets (e.g., identified by a PDU set identity) of two different LCHs are inter-related, the UE ensures that packets of those two inter-related PDU sets/LCHs are transmitted in the same TB(s) or at least close to each other in order to satisfy the strict latency requirements.

In one or more embodiments, alternatively, or in addition to uplink resource allocation, relationship information on inter-related PDU sets of different LCHs/bearer may be signaled by the UE to the gNB for the purpose of an improved downlink scheduling.

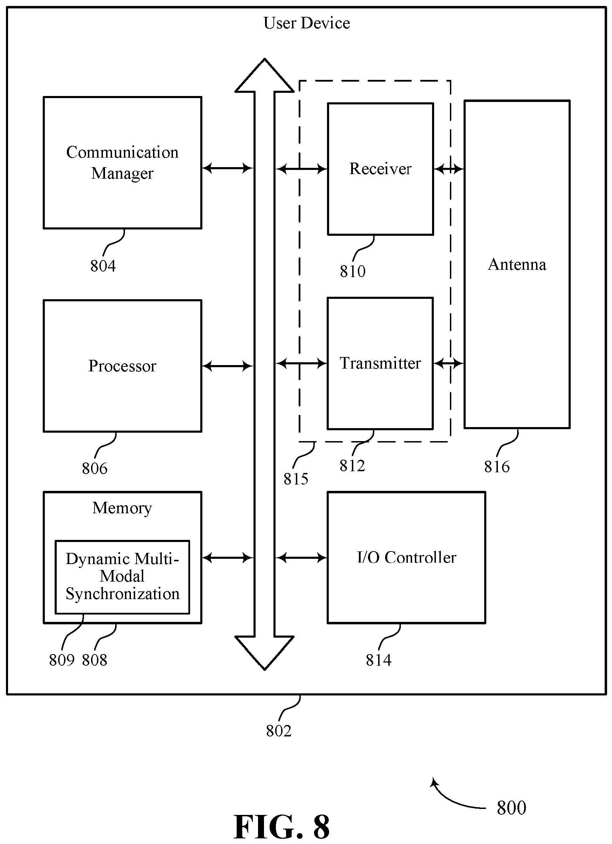

**FIG. 8** illustrates an example of a block diagram **800** of a user device **802** that provides for wireless communication that supports an LCP enhanced for latency-sensitive traffic such as XR traffic, in accordance with aspects of the present disclosure. The user device **802** may be an example of a UE **104** as described herein. The user device **802** may support wireless communication with one or more base stations **102,** UEs **104,** or any combination thereof. The user device **802** may include components for bi-directional communications including components for transmitting and receiving communications, such as a communication manager **804,** a processor **806,** a memory **808,** a receiver **810,** a transmitter **812,** and an I/O controller **814.** These components may be in electronic communication or otherwise coupled (e.g., operatively, communicatively, functionally, electronically, electrically) via one or more interfaces (e.g., buses). The receiver **810** and transmitter **812** may exist on a same chip and be collectively referred to as a transceiver **815.**

The communication manager **804,** the receiver **810,** the transmitter **812,** or various combinations thereof or various components thereof may be examples of means for performing various aspects of the present disclosure as described herein. For example, the communication manager **804,** the processor **806,** the receiver **810,** the transmitter **812,** or various combinations or components thereof may support a method for performing one or more of the functions described herein. In an example, the processor **806** executes a dynamic RGB prioritization application that configures the communication manager **804** to perform an enhanced LCP procedure for either prioritizing latency-sensitive data for assignment to an uplink signal or reverting to LCH prioritization for other traffic or data.

In some implementations, the communication manager **804,** the receiver **810,** the transmitter **812,** or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor **806** and the memory **808** coupled with the processor **806** may be configured to perform one or more of the functions described herein (e.g., by executing, by the processor **806,** instructions stored in the memory **808).** In an example, the processor **806** executes a dynamic multimodal synchronization application **809** that configures the communication manager **804** to perform an enhanced LCP procedure for either synchronizing multimodal traffic such as multi-sensor XR traffic by ratioed assignment to an uplink signal or reverting to LCH prioritization for other traffic or data. The ratioed assignment corresponds to the expected relative rate of data provided for each mode, thus enabling synchronous data delivery.

Additionally, or alternatively, in some implementations, the communication manager **804,** the receiver **810,** the transmitter **812,** or various combinations or components thereof may be implemented in code (e.g., as communications management software or firmware) executed by the processor **806.** If implemented in code executed by the processor **806,** the functions of the communication manager **804,** the receiver **810,** the transmitter **812,** or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some implementations, the communication manager **804** may be configured to perform various operations (e.g., receiving, monitoring, transmitting) using or otherwise in cooperation with the receiver **810,** the transmitter **812,** or both. For example, the communication manager **804** may receive information from the receiver **810,** send information to the transmitter **812,** or be integrated in combination with the receiver **810,** the transmitter **812,** or both to receive information, transmit information, or perform various other operations as described herein. Although the communication manager **804** is illustrated as a separate component, in some implementations, one or more functions described with reference to the communication manager **804** may be supported by or performed by the processor **806,** the memory **808,** or any combination thereof. For example, the memory **808** may store code, which may include instructions executable by the processor **806** to cause the user device **802** to perform various aspects of the present disclosure as described herein, or the processor **806** and the memory **808** may be otherwise configured to perform or support such operations.

The processor **806** may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor **806** may be configured to operate a memory array using a memory controller. In some other implementations, a memory controller may be integrated into the processor **806.** The **processor 806** may be configured to execute computer-readable instructions stored in a memory (e.g., the memory **808)** to cause/configure the user device **802** to perform various functions of the present disclosure.

The memory **808** may include random access memory (RAM) and read-only memory (ROM). The memory **808** may store computer-readable, computer-executable code including instructions that, when executed by the processor **806** cause the user device **802** to perform various functions described herein. The code may be stored in a non-transitory computer-readable medium such as system memory or another type of memory. In some implementations, the code may not be directly executable by the processor **806** but may cause/configure a computer (e.g., when the code is compiled and executed) to perform functions described herein. In some implementations, the memory **808** may include, among other things, a basic I/O system (BIOS) which may control basic hardware or software operation such as the interaction with peripheral components or devices.

The I/O controller **814** may manage input and output signals for the user device **802.** The I/O controller **814** may also manage peripherals not integrated into the user device **802.** In some implementations, the I/O controller **814** may represent a physical connection or port to an external peripheral. In some implementations, the I/O controller **814** may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller **814** may be implemented as part of a processor, such as the processor **806.** In some implementations, a user may interact with the user device **802** via the I/O controller **814** or via hardware components controlled by the I/O controller **814.**

In some implementations, the user device **802** may include a single antenna **816.** However, in some other implementations, the user device **802** may have more than one antenna **816,** which may be capable of concurrently transmitting or receiving multiple wireless transmissions. The receiver **810** and the transmitter **812** may communicate bi-directionally, via the one or more antennas **816,** wired, or wireless links as described herein. For example, the receiver **810** and the transmitter **812** may represent a wireless transceiver and may communicate bi-directionally with another wireless transceiver. The transceiver may also include a modem to modulate the packets, to provide the modulated packets to one or more antennas **816** for transmission, and to demodulate packets received from the one or more antennas **816.**

According to one or more aspects of the present disclosure, the communication manager **804** may support wireless communication at a first device (e.g., the user device **802)** in accordance with examples as disclosed herein. The communication manager **804** may be configured as or otherwise support wireless communication with a network device, such as a base station **102 (****FIG.** 1). The transceiver **815** includes at least one receiver **810** and at least one transmitter **812** that enable the user device **802** to communicate with the network device. The communication manager **804** is communicatively coupled to the transceiver **815.** The processor **906** executes a dynamic multimodal synchronization application **809** that configures the communication manager **804** to perform aspects of the present disclosure. In one or more embodiments, the communication manager **804** receives, by the transceiver **815** on a downlink from the network device, one or more control messages containing an uplink resource allocation grant and a logical channel configuration for more than one logical channels. The more than one logical channels belong to one logical channel group. The logical channel configuration includes a priority value for each logical channel of the more than one logical channels and a ratio for each of the more than one logical channels. The communication manager **804** determines an amount of multi-modal traffic buffered in one or more uplink buffers for the more than one logical channels of the logical channel group. The multi-modal traffic is inter-dependent and requires synchronized communication. The communication manager **804** assigns, on a medium access control layer, resources allocated by the uplink grant to each of the more than one logical channels of the logical channel group. In particular, the allocation is according to the ratio associated with each of the more than one logical channels and the determined amount of data buffered for the more than one logical channels. The communication manager **804** transmits, by the transceiver **815** to the network device, a multiplexed uplink signal containing the multi-modal traffic of the more than one logical channels, utilizing the uplink resource allocation grant.

In one or more embodiments, the communication manager **804,** in response to determining that the one or more uplink buffers contain the multi-modal traffic in the more than one logical channels, transmits a buffer status report to the network device. The buffer status report indicates a capacity to multiplex an uplink signal. The communication manager 804 assigns the resources allocated by the uplink grant in response to receiving the one or more control messages from the network device prompted by the buffer status report.

In one or more particular embodiments, the communication manager **804** determines that the user device is buffering, in the one or more uplink buffers, the multi-modal traffic by identifying extended reality (XR) bearers configured by radio resource control (RRC) signaling. In one or more particular embodiments, the communication manager **804** reverts to assigning traffic data to an uplink signal according to priority value associated with each of the more than one logical channels in response to determining that the one or more uplink buffers no longer contains multi-modal traffic. In one or more embodiments, the one or more control messages include downlink control information (DCI).

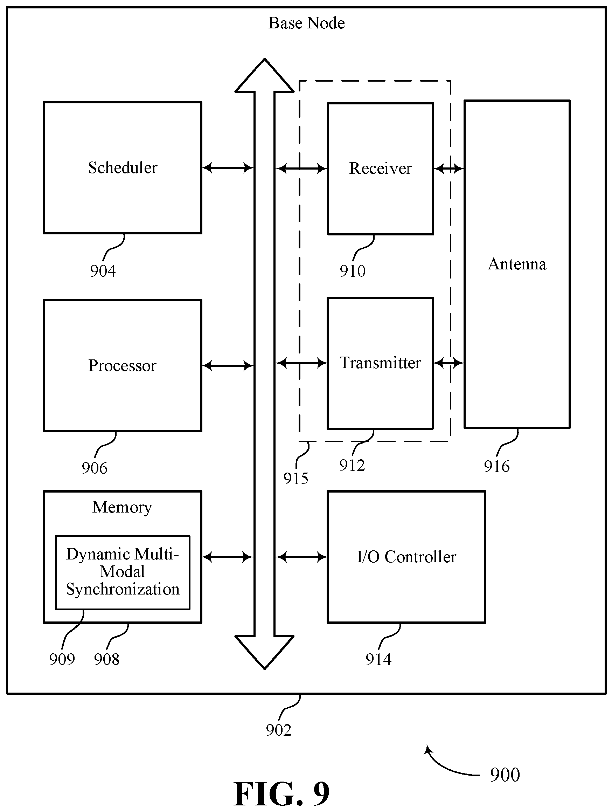

**FIG.** 9 illustrates an example of a block diagram **900** of a network device **902** that supports wireless communication that supports an LCP enhanced for latency-sensitive traffic such as XR traffic, in accordance with aspects of the present disclosure. The network device **902** may be an example of a base station **102** or a base node, as described herein. The network device **902** may support wireless communication with one or more base stations **102** and core network **106** as described in **FIG. 1****,** UEs **104,** or any combination thereof. The network device **902** may include components for bi-directional communications including components for transmitting and receiving communications, such as a scheduler **904,** a processor **906,** a memory **908,** a receiver **910,** transmitter **912,** and an I/O controller **914.** These components may be in electronic communication or otherwise coupled (e.g., operatively, communicatively, functionally, electronically, electrically) via one or more interfaces (e.g., buses). The receiver **910** and transmitter **912** may be located on a single chip and collectively referred to as a transceiver **915.**

The scheduler **904,** the receiver **910,** the transmitter **912,** or various combinations thereof or various components thereof may be examples of means for performing various aspects of the present disclosure as described herein. For example, the scheduler **904,** the receiver **910,** the transmitter **912,** or various combinations or components thereof may support a method for performing one or more of the functions described herein.

In some implementations, the scheduler **904,** the receiver **910,** the transmitter **912,** or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some implementations, the processor **906** and the memory **908** coupled with the processor **906** may be configured to perform one or more of the functions described herein (e.g., by executing, by the processor **906,** instructions stored in the memory **908).** In an example, the processor **906** executes a dynamic multimodal synchronization application **909** that configures the scheduler **904** to perform an enhanced LCP procedure scheduling a user device such as UE **104 (****FIG. 1****)** for either synchronizing multimodal traffic such as multi-sensor XR traffic by ratioed assignment to an uplink signal or reverting to LCH prioritization for other traffic or data. The ratioed assignment corresponds to the expected relative rate of data provided for each mode, thus enabling synchronous data delivery.

Additionally, or alternatively, in some implementations, the scheduler **904,** the receiver **910,** the transmitter **912,** or various combinations or components thereof may be implemented in code (e.g., as communications management software or firmware) executed by the processor **906.** If implemented in code executed by the processor **906,** the functions of the scheduler **904,** the receiver **910,** the transmitter **912,** or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some implementations, the scheduler **904** may be configured to perform various operations (e.g., receiving, monitoring, transmitting) using or otherwise in cooperation with the receiver **910,** the transmitter **912,** or both. For example, the scheduler **904** may receive information from the receiver **910,** send information to the transmitter **912,** or be integrated in combination with the receiver **910,** the transmitter **912,** or both to receive information, transmit information, or perform various other operations as described herein. Although the scheduler **904** is illustrated as a separate component, in some implementations, one or more functions described with reference to the scheduler **904** may be supported by or performed by the processor **906,** the memory **908,** or any combination thereof. For example, the memory **908** may store code, which may include instructions executable by the processor **906** to cause/configure the network device **902** to perform various aspects of the present disclosure as described herein, or the processor **906** and the memory **908** may be otherwise configured to perform or support such operations.

The processor **906** may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some implementations, the processor **906** may be configured to operate a memory array using a memory controller. In some other implementations, a memory controller may be integrated into the processor **906.** The processor **906** may be configured to execute computer-readable instructions stored in a memory (e.g., the memory **908)** to cause the network device **902** to perform various functions of the present disclosure.

The memory **908** may include random access memory (RAM) and read-only memory (ROM). The memory **908** may store computer-readable, computer-executable code including instructions that, when executed by the processor **906** cause the network device **902** to perform various functions described herein. The code may be stored in a non-transitory computer-readable medium such as system memory or another type of memory. In some implementations, the code may not be directly executable by the processor **906** but may cause/configure a computer (e.g., when compiled and executed) to perform functions described herein. In some implementations, the memory **908** may include, among other things, a basic I/O system (BIOS) which may control basic hardware or software operation such as the interaction with peripheral components or devices.

The I/O controller **914** may manage input and output signals for the network device **902.** The I/O controller **914** may also manage peripherals not integrated into the network device **902.** In some implementations, the I/O controller **914** may represent a physical connection or port to an external peripheral. In some implementations, the I/O controller **914** may utilize an operating system such as iOS^{®}, ANDROID^{®}, MS-DOS^{®}, MS-WINDOWS^{®}, OS/2^{®}, UNIX^{®}, LINUX^{®}, or another known operating system. In some implementations, the I/O controller **914** may be implemented as part of a processor, such as the processor **906.** In some implementations, a user may interact with the network device **902** via the I/O controller **914** or via hardware components controlled by the I/O controller **914.**

In some implementations, the network device **902** may include a single antenna **916.** However, in some other implementations, the network device **902** may have more than one antenna **916,** which may be capable of concurrently transmitting or receiving multiple wireless transmissions. The receiver **910** and the transmitter **912** may communicate bi-directionally, via the one or more antennas **916,** wired, or wireless links as described herein. For example, the receiver **910** and the transmitter **912** may represent a wireless transceiver and may communicate bi-directionally with another wireless transceiver. The transceiver may also include a modem to modulate the packets, to provide the modulated packets to one or more antennas **916** for transmission, and to demodulate packets received from the one or more antennas **916.**

According to one or more aspects of the present disclosure, the scheduler **904** may support wireless communication at a first network device (e.g., the network device **902)** in accordance with examples as disclosed herein. The network device **902** includes the transceiver **915** including at least one receiver **910** and at least one transmitter **912** that enable the network device **902** to communicate with a user device such as UE **104 (****FIG. 1****).** The scheduler **904** is communicatively coupled to the transceiver **915.** According to aspects of the present disclosure, the scheduler **904**

In one or more embodiments, the scheduler **904** transmits, by the transceiver **915** on a downlink to the user device, one or more control messages containing an uplink resource allocation grant and a logical channel configuration for more than one logical channels. The more than one logical channels belong to one logical channel group. The logical channel configuration includes a priority value for each logical channel of the more than one logical channels and a ratio for each of the more than one logical channels. The one or more control messages prompt the user device to determine an amount of multi-modal traffic buffered in one or more uplink buffers for the more than one logical channels of the logical channel group. The multi-modal traffic is inter-dependent and requires synchronized communication. The one or more control messages prompt the user device to assign, on a medium access control layer, resources allocated by the uplink grant to each of the more than one logical channels of the logical channel group. In particular, the allocation is according to the ratio associated with each of the more than one logical channels and the determined amount of data buffered for the more than one logical channels. The scheduler **904** receives, by the transceiver **915** from the user device, a multiplexed uplink signal containing the multi-modal traffic of the more than one logical channels, utilizing the uplink resource allocation grant.

In one or more embodiments, the scheduler **904** receives, by the transceiver **915** from the user device, a buffer status report indicating that the one or more uplink buffers contain the multi-modal traffic in the more than one logical channels and a capacity to multiplex an uplink signal. The scheduler **904** transmits the one or control message to configure the user device to assign the resources allocated by the uplink grant in response to receiving the buffer status report. In one or more embodiments, the scheduler **904** determines that the user device is buffering, in the one or more uplink buffers, the multi-modal traffic by identifying extended reality (XR) bearers configured by radio resource control (RRC) signaling.

In one or more embodiments, the scheduler **904** transmits a second one or more control messages to configure the user device to revert to assigning traffic data to an uplink signal according to priority value associated with each of the more than one logical channels in response to determining that the one or more uplink buffers of the user device no longer contain multi-modal traffic. In one or more embodiments, the scheduler **904** transmits downlink control information (DCI) within the one or more control messages.

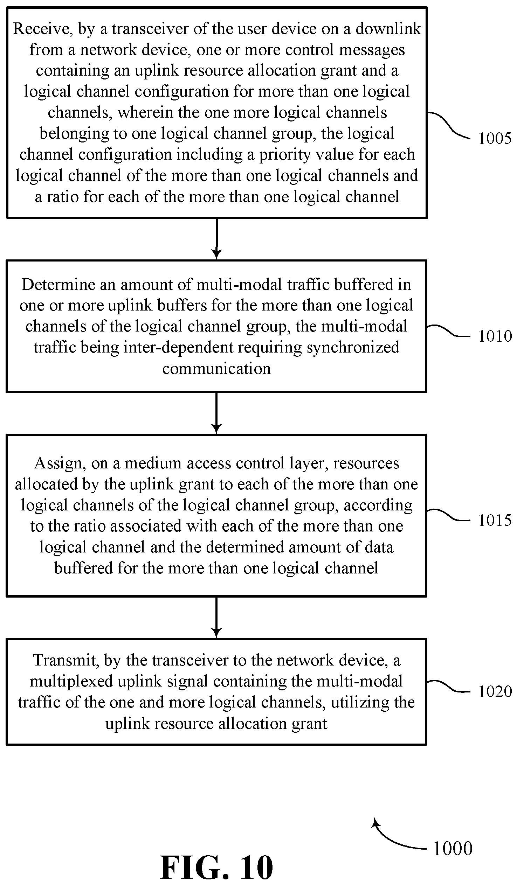

**FIG. 10** illustrates a flowchart of a method **1000** that supports wireless communication by a user device with a network device that enhances an LCP procedure for multimodal traffic or data such as multi-sensory XR traffic, in accordance with aspects of the present disclosure. The operations of the method **1000** may be implemented by a user device or its components as described herein. For example, the operations of the method **1000** may be performed by a UE **104** as described with reference to **FIGs.** 1 through 8. In some implementations, the device may execute a set of instructions to control the function elements of the device to perform the described functions. Additionally, or alternatively, the device may perform aspects of the described functions using special-purpose hardware.

**At 1005,** the method **1000** includes, according to the claimed invention, receiving, by a transceiver of the user device on a downlink from a network device, one or more control messages containing an uplink resource allocation grant and a logical channel configuration for more than one logical channels. The more than one logical channels belong to one logical channel group. The logical channel configuration includes a priority value for each logical channel of the more than one logical channels and a ratio for each of the more than one logical channels. The operations of **1005** may be performed in accordance with examples as described herein. In some implementations, aspects of the operations of **1005** may be performed by a device as described with reference to **FIGs. 1** or **8****.**

**At 1010,** the method **1000** includes, according to the claimed invention, determining an amount of multi-modal traffic buffered in one or more uplink buffers for the more than one logical channels of the logical channel group, the multi-modal traffic being inter-dependent requiring synchronized communication. The operations of **1010** may be performed in accordance with examples as described herein. In some implementations, aspects of the operations of **1010** may be performed by a device as described with reference to **FIGs. 1** or **8****.**

**At 1015,** the method **1000** includes, according to the claimed invention, assigning, on a medium access control layer, resources allocated by the uplink grant to each of the more than one logical channels of the logical channel group, according to the ratio associated with each of the more than one logical channels and the determined amount of data buffered for the more than one logical channels. The operations of **1015** may be performed in accordance with examples as described herein. In some implementations, aspects of the operations of **1015** may be performed by a device as described with reference to **FIGs. 1** or **8****.**

**At 1020,** the method **1000** includes, according to the claimed invention, transmitting, by the transceiver to the network device, a multiplexed uplink signal containing the multi-modal traffic of the more than one more logical channels, utilizing the uplink resource allocation grant. The operations of **1020** may be performed in accordance with examples as described herein. In some implementations, aspects of the operations of **1020** may be performed by a device as described with reference to **FIGs. 1** or **8****.**

In one or more embodiments, the method **1000** may include, in response to determining that the one or more uplink buffers contain the multi-modal traffic in the more than one logical channels, transmitting a buffer status report to the network device, the buffer status report indicating a capacity to multiplex an uplink signal. The method **1000** may include assigning the resources allocated by the uplink grant in response to receiving the one or more control messages from the network device prompted by the buffer status report.

In one or more embodiments, the method **1000** may include determining that the user device is buffering, in the one or more uplink buffers, the multi-modal traffic by identifying extended reality (XR) bearers configured by radio resource control (RRC) signaling. In one or more embodiments, the method **1000** may include reverting to assigning traffic data to an uplink signal according to priority value associated with each of the more than one logical channels in response to determining that the one or more uplink buffers no longer contains multi-modal traffic. In one or more embodiments, the one or more control messages include downlink control information (DCI).

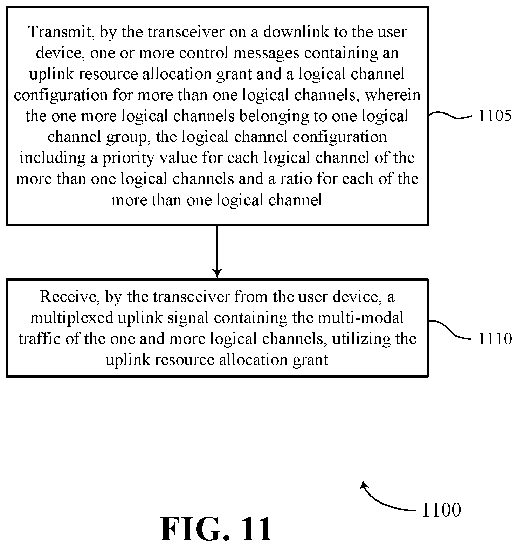

**FIG. 11** illustrates a flowchart of a method **1100** that that supports wireless communication by network device with a user device that enhances an LCP procedure for multimodal traffic or data such as multi-sensory XR traffic, in accordance with aspects of the present disclosure. The operations of the method **1100** may be implemented by a device or its components as described herein. For example, the operations of the method **1100** may be performed by a network device, base node, or base station **102** as described with reference to **FIGs. 1** through **9****.** In some implementations, the network device may execute a set of instructions to control the function elements of the network device to perform the described functions. Additionally, or alternatively, the network device may perform aspects of the described functions using special-purpose hardware.

**At 1105,** the method may include transmitting, by the transceiver on a downlink to the user device, one or more control messages containing an uplink resource allocation grant and a logical channel configuration for more than one logical channels. The more than one logical channels belong to one logical channel group. The logical channel configuration includes a priority value for each logical channel of the more than one logical channels and a ratio for each of the more than one logical channels. The operations of **1105** may be performed in accordance with examples as described herein. In some implementations, aspects of the operations of **1105** may be performed by a device as described with reference to **FIGs.** 1 or **9****.**

The one or more control messages prompt the user device to determine an amount of multi-modal traffic buffered in one or more uplink buffers for the more than one logical channels of the logical channel group, the multi-modal traffic being inter-dependent requiring synchronized communication. The one or more control messages further prompt the user device to assign, on a medium access control layer, resources allocated by the uplink grant to each of the more than one logical channels of the logical channel group, according to the ratio associated with each of the more than one logical channels and the determined amount of data buffered for the more than one logical channels.

**At 1110,** the method may include receiving, by the transceiver from the user device, a multiplexed uplink signal containing the multi-modal traffic of the more than one logical channels, utilizing the uplink resource allocation grant. The operations of **1110** may be performed in accordance with examples as described herein. In some implementations, aspects of the operations of **1110** may be performed by a device as described with reference to **FIGs. 1** **or** **9****.**

In one or more embodiments, the method **1100** may include receiving, by the transceiver from the user device, a buffer status report indicating that the one or more uplink buffers contain the multi-modal traffic in the more than one logical channels and a capacity to multiplex an uplink signal. The method **1100** may include transmitting the one or control message to configure the user device to assign the resources allocated by the uplink grant in response to receiving the buffer status report.

In one or more embodiments, the method **1100** may include determining that the user device is buffering, in the one or more uplink buffers, the multi-modal traffic by identifying extended reality (XR) bearers configured by radio resource control (RRC) signaling. In one or more embodiments, the method **1100** may include transmitting a second one or more control messages to configure the user device to revert to assigning traffic data to an uplink signal according to priority value associated with each of the more than one logical channels in response to determining that the one or more uplink buffers of the user device no longer contain multi-modal traffic. In one or more embodiments, the method **1100** may include transmitting downlink control information (DCI) within the one or more control messages.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor.

Any connection may be properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form to avoid obscuring the concepts of the described example.

The description herein is provided to enable a person having ordinary skill in the art to make or use the disclosure.

## Claims

1. A user equipment, UE, (104, 800) for wireless communication, the UE (104, 800) comprising:
at least one memory (808); and
at least one processor (806) coupled with the at least one memory (808) and configured to cause the UE (104, 800) to:
receive (1005), from a network device (102), one or more control messages containing an uplink, UL, resource allocation grant and a logical channel configuration for more than one logical channel, wherein the more than one logical channel belong to one logical channel group, the logical channel configuration including a priority value for each logical channel of the more than one logical channel and a ratio for each of the more than one logical channel;
determine (1010) an amount of multi-modal traffic buffered in one or more UL buffers for the more than one logical channel, the multi-modal traffic being inter-dependent and requiring synchronized communication;
assign (1015), on a medium access control, MAC, layer, resources allocated by the UL resource allocation grant to each of the more than one logical channel, according to the ratio associated with each of the more than one logical channel and the determined amount of multi-modal traffic buffered for the more than one logical channel; and
transmit (1020), to the network device (102), utilizing the UL resource allocation grant, a multiplexed UL signal containing the multi-modal traffic of the more than one logical channel.

2. The UE (104, 800) of claim 1, wherein the at least one processor (806) is configured to cause the UE (104, 800) to:
in response to determining that the one or more UL buffers contain the multi-modal traffic in the more than one logical channel, transmit a buffer status report to the network device (102), the buffer status report indicating a capacity to multiplex an UL signal; and
assign the resources allocated by the UL resource allocation grant in response to receiving the one or more control messages from the network device (102) prompted by the buffer status report.

3. The UE (104, 800) of claim 2, wherein the at least one processor (806) is configured to cause the UE (104, 800) to determine that the UE (104, 800) is buffering the multi-modal traffic in the one or more UL buffers by identifying extended reality, XR, bearers configured by radio resource control, (RRC, signaling.

4. The UE (104, 800) of claim 2, wherein the at least one processor (806) is configured to cause the UE (104, 800) to revert to assigning traffic data to an UL signal according to a priority value associated with each of the more than one logical channel in response to determining that the one or more UL buffers no longer contain multi-modal traffic.

5. A base station (102, 900) for wireless communication, the base station (102, 900) comprising:
at least one memory (908); and
at least one processor (906) coupled with the at least one memory (908) and configured to cause the base station (102, 900) to:
transmit (1105), on a downlink to a user equipment, UE, (104, 800), one or more control messages containing an uplink, UL, resource allocation grant and a logical channel configuration for more than one logical channel, wherein the more than one logical channel belong to one logical channel group, the logical channel configuration including a priority value for each logical channel of the more than one logical channel and a ratio for each of the more than one logical channel to prompt the UE (104, 800) to:
determine an amount of multi-modal traffic buffered in one or more UL buffers for the more than one logical channel, the multi-modal traffic being inter-dependent and requiring synchronized communication;
assign, on a medium access control, MAC, layer, resources allocated by the UL resource allocation grant to each of the more than one logical channel, according to the ratio associated with each of the more than one logical channel and the determined amount of multi-modal traffic buffered for the more than one logical channel; and
receive (1110), from the UE (104, 800), utilizing the UL resource allocation grant, a multiplexed UL signal containing the multi-modal traffic of the more than one logical channel.

6. The base station (102, 900) of claim 5, wherein the at least one processor (906) is configured to cause the base station (102, 900) to:
receive, from the UE (104, 800), a buffer status report indicating that the one or more UL buffers contain the multi-modal traffic in the more than one logical channel and a capacity to multiplex an UL signal; and
transmit the one or more control messages to configure the UE (104, 800) to assign the resources allocated by the UL resource allocation grant in response to receiving the buffer status report.

7. The base station (102, 900) of claim 5, wherein the at least one processor (906) is configured to cause the base station (102, 900) to determine that the UE (104, 800) is buffering the multi-modal traffic in the one or more UL buffers by identifying extended reality, XR, bearers configured by radio resource control, RRC, signaling.

8. The base station (102, 900) of claim 5, wherein the at least one processor (906) is configured to cause the base station (102, 900) to transmit a second one or more control messages to configure the UE (104, 800) to revert to assigning traffic data to an UL signal according to a priority value associated with each of the more than one logical channel in response to determining that the one or more UL buffers of the UE (104, 800) no longer contains multi-modal traffic.

9. The base station (102, 900) of claim 5, wherein the at least one processor (906) is configured to cause the base station (102, 900) to transmit downlink control information, DCI, within the one or more control messages.

10. A method for wireless communication performed by a user equipment, UE, (104, 800), the method comprising:
receiving (1005), on a downlink from a network device (102), one or more control messages containing an UL resource allocation grant and a logical channel configuration for more than one logical channel, wherein the more than one logical channel belong to one logical channel group, the logical channel configuration including a priority value for each logical channel of the more than one logical channel and a ratio for each of the more than one logical channel;
determining (1010) an amount of multi-modal traffic buffered in one or more uplink, UL, buffers for the more than one logical channel, the multi-modal traffic being inter-dependent and requiring synchronized communication;
assigning (1015), on a medium access control, MAC, layer, resources allocated by the UL resource allocation grant to each of the more than one logical channel, according to the ratio associated with each of the more than one logical channel and the determined amount of multi-modal traffic buffered for the more than one logical channel; and
transmitting (1020), to the network device (102), utilizing the UL resource allocation grant, a multiplexed UL signal containing the multi-modal traffic of the more than one logical channel.

11. The method of claim 10, comprising:
in response to determining that the one or more UL buffers contain the multi-modal traffic in the more than one logical channel, transmitting a buffer status report to the network device (102), the buffer status report indicating a capacity to multiplex an UL signal; and
assigning the resources allocated by the UL resource allocation grant in response to receiving the one or more control messages from the network device (102) prompted by the buffer status report.

12. The method of claim 11, wherein determining that the UE (104, 800) is buffering the multi-modal traffic in the one or more UL buffers comprises identifying extended reality, XR, bearers configured by radio resource control, RRC, signaling.

13. The method of claim 11, comprising reverting to assigning traffic data to an UL signal according to a priority value associated with each of the more than one logical channel in response to determining that the one or more UL buffers no longer contain multi-modal traffic.

14. A method performed by a base station (102, 900) the method comprising:
transmitting (1105), on a downlink to a user equipment, UE, (104, 800), one or more control messages containing an uplink, UL, resource allocation grant and a logical channel configuration for more than one logical channel, wherein the more than one logical channel belong to one logical channel group, the logical channel configuration including a priority value for each logical channel of the more than one logical channel and a ratio for each of the more than one logical channel to prompt the UE (104, 800) to:
determining an amount of multi-modal traffic buffered in one or more UL buffers for the more than one logical channel, the multi-modal traffic being inter-dependent and requiring synchronized communication;
assigning, on a medium access control, MAC, layer, resources allocated by the UL resource allocation grant to each of the more than one logical channel, according to the ratio associated with each of the more than one logical channel and the determined amount of multi-modal traffic buffered for the more than one logical channel; and
receiving (1110), from the UE (104, 800), utilizing the UL resource allocation grant, a multiplexed UL signal containing the multi-modal traffic of the more than one logical channel.

15. A processor (806) for a user equipment, UE, (104, 800) for wireless communication, the processor (806) being configured to cause the UE (104, 800) to:
receive (1005), from a network device (102), one or more control messages containing an uplink, UL, resource allocation grant and a logical channel configuration for more than one logical channel, wherein the more than one logical channel belong to one logical channel group, the logical channel configuration including a priority value for each logical channel of the more than one logical channel and a ratio for each of the more than one logical channel;
determine (1010) an amount of multi-modal traffic buffered in one or more UL buffers for the more than one logical channel, the multi-modal traffic being inter-dependent and requiring synchronized communication;
assign (1015), on a medium access control, MAC, layer, resources allocated by the UL resource allocation grant to each of the more than one logical channel, according to the ratio associated with each of the more than one logical channel and the determined amount of multi-modal traffic buffered for the more than one logical channel; and
transmit (1020), to the network device (102), utilizing the UL resource allocation grant, a multiplexed UL signal containing the multi-modal traffic of the more than one logical channel.

## Patentansprüche

1. Benutzergerät (user equipment - UE) (104, 800) für drahtlose Kommunikation, wobei das UE (104, 800) Folgendes umfasst:
mindestens einen Speicher (808); und
mindestens einen Prozessor (806), der mit dem mindestens einen Speicher (808) gekoppelt ist und dazu konfiguriert ist, das UE (104, 800) zu Folgendem zu veranlassen:
Empfangen (1005), von einer Netzwerkvorrichtung (102), einer oder mehrerer Steuernachrichten, die eine Uplink(UL)-Ressourcenzuteilungsgewährung und eine logische Kanalkonfiguration für mehr als einen logischen Kanal enthalten, wobei der mehr als eine logische Kanal zu einer logischen Kanalgruppe gehört, wobei die logische Kanalkonfiguration einen Prioritätswert für jeden logischen Kanal des mehr als einen logischen Kanals und ein Verhältnis für jeden des mehr als einen logischen Kanals beinhaltet;
Bestimmen (1010) einer Menge von multimodalem Verkehr, die in einem oder mehreren UL-Puffern für den mehr als einen logischen Kanal gepuffert wird, wobei der multimodale Verkehr voneinander abhängig ist und eine synchronisierte Kommunikation erfordert;
Zuweisen (1015), auf einer Medienzugriffssteuerungs(medium access control - MAC)-Schicht, von Ressourcen, die durch die UL-Ressourcenzuteilungsgewährung jedem des mehr als einen logischen Kanals zugeteilt wurden, gemäß dem Verhältnis, das jedem des mehr als einen logischen Kanals zugeordnet ist, und der bestimmten Menge von multimodalem Verkehr, die für den mehr als einen logischen Kanal gepuffert wird; und
Übertragen (1020), an die Netzwerkvorrichtung (102) unter Nutzung der UL-Ressourcenzuteilungsgewährung, eines gemultiplexten UL-Signals, das den multimodalen Verkehr des mehr als einen logischen Kanals enthält.

2. UE (104, 800) nach Anspruch 1, wobei der mindestens eine Prozessor (806) dazu konfiguriert ist, das UE (104, 800) zu Folgendem zu veranlassen:
als Reaktion auf das Bestimmen, dass der eine oder die mehreren UL-Puffer den multimodalen Verkehr in dem mehr als einen logischen Kanal enthalten, Übertragen eines Pufferstatusberichts an die Netzwerkvorrichtung (102), wobei der Pufferstatusbericht eine Kapazität zum Multiplexen eines UL-Signals angibt; und
Zuweisen der durch die UL-Ressourcenzuteilungsgewährung zugeteilten Ressourcen als Reaktion auf das Empfangen der einen oder mehreren Steuernachrichten von der durch den Pufferstatusbericht aufgeforderten Netzwerkvorrichtung (102).

3. UE (104, 800) nach Anspruch 2, wobei der mindestens eine Prozessor (806) dazu konfiguriert ist, das UE (104, 800) zu veranlassen, zu bestimmen, dass das UE (104, 800) den multimodalen Verkehr in dem einen oder den mehreren UL-Puffern puffert, indem es Erweiterte-Realität(XR)-Träger identifiziert, die durch Funkressourcensteuerung(radio resource control - RRC)-Signalisierung konfiguriert sind.

4. UE (104, 800) nach Anspruch 2, wobei der mindestens eine Prozessor (806) dazu konfiguriert ist, das UE (104, 800) zu veranlassen, dazu zurückzukehren, Verkehrsdaten einem UL-Signal gemäß einem Prioritätswert zuzuweisen, der jedem der mehr als einen logischen Kanäle zugeordnet ist, als Reaktion auf das Bestimmen, dass der eine oder die mehreren UL-Puffer keinen multimodalen Verkehr mehr enthalten.

5. Basisstation (102, 900) für drahtlose Kommunikation, wobei die Basisstation (102, 900) Folgendes umfasst:
mindestens einen Speicher (908); und
mindestens einen Prozessor (906), der mit dem mindestens einen Speicher (908) gekoppelt ist und dazu konfiguriert ist, die Basisstation (102, 900) zu Folgendem zu veranlassen:
Übertragen (1105), auf einem Downlink an ein Benutzergerät (UE) (104, 800), einer oder mehrerer Steuernachrichten, die eine Uplink(UL)-Ressourcenzuteilungsgewährung und eine logische Kanalkonfiguration für mehr als einen logischen Kanal enthalten, wobei der mehr als eine logische Kanal zu einer logischen Kanalgruppe gehört, wobei die logische Kanalkonfiguration einen Prioritätswert für jeden logischen Kanal des mehr als einen logischen Kanals und ein Verhältnis für jeden des mehr als einen logischen Kanals beinhaltet, um das UE (104, 800) zu Folgendem aufzufordern:
Bestimmen einer Menge von multimodalem Verkehr, die in einem oder mehreren UL-Puffern für den mehr als einen logischen Kanal gepuffert wird, wobei der multimodale Verkehr voneinander abhängig ist und eine synchronisierte Kommunikation erfordert;
Zuweisen, auf einer Medienzugriffssteuerungs(medium access control - MAC)-Schicht, von Ressourcen, die durch die UL-Ressourcenzuteilungsgewährung jedem des mehr als einen logischen Kanals zugeteilt wurden, gemäß dem Verhältnis, das jedem des mehr als einen logischen Kanals zugeordnet ist, und der bestimmten Menge von multimodalem Verkehr, die für den mehr als einen logischen Kanal gepuffert wird; und
Empfangen (1110), von dem UE (104, 800) unter Nutzung der UL-Ressourcenzuteilungsgewährung, eines gemultiplexten UL-Signals, das den multimodalen Verkehr des mehr als einen logischen Kanals enthält.

6. Basisstation (102, 900) nach Anspruch 5, wobei der mindestens eine Prozessor (906) dazu konfiguriert ist, die Basisstation (102, 900) zu Folgendem zu veranlassen:
Empfangen, von dem UE (104, 800), eines Pufferstatusberichts, der angibt, dass der eine oder die mehreren UL-Puffer den multimodalen Verkehr in dem mehr als einen logischen Kanal und eine Kapazität zum Multiplexen eines UL-Signals enthalten; und
Übertragen der einen oder der mehreren Steuernachrichten, um das UE (104, 800) dazu zu konfigurieren, die durch die UL-Ressourcenzuteilungsgewährung zugeteilten Ressourcen als Reaktion auf das Empfangen des Pufferstatusberichts zuzuweisen.

7. Basisstation (102, 900) nach Anspruch 5, wobei der mindestens eine Prozessor (906) dazu konfiguriert ist, die Basisstation (102, 900) zu veranlassen, zu bestimmen, dass das UE (104, 800) den multimodalen Verkehr in dem einen oder den mehreren UL-Puffern puffert, indem es Erweiterte-Realität(XR)-Träger identifiziert, die durch Funkressourcensteuerung(radio resource control - RRC)-Signalisierung konfiguriert sind.

8. Basisstation (102, 900) nach Anspruch 5, wobei der mindestens eine Prozessor (906) dazu konfiguriert ist, die Basisstation (102, 900) zu veranlassen, eine zweite oder mehrere Steuernachrichten zu übertragen, um das UE (104, 800) dazu zu konfigurieren, dazu zurückzukehren, einem UL-Signal Verkehrsdaten gemäß einem Prioritätswert zuzuweisen, der jedem der mehr als einen logischen Kanäle zugeordnet ist, als Reaktion auf das Bestimmen, dass der eine oder die mehreren UL-Puffer des UE (104, 800) keinen multimodalen Verkehr mehr enthalten.

9. Basisstation (102, 900) nach Anspruch 5, wobei der mindestens eine Prozessor (906) dazu konfiguriert ist, die Basisstation (102, 900) zu veranlassen, Downlink-Steuerinformationen (downlink control information - DCI) innerhalb der einen oder mehreren Steuernachrichten zu übertragen.

10. Verfahren zur drahtlosen Kommunikation, das durch ein Benutzergerät (UE) (104, 800) durchgeführt wird, wobei das Verfahren Folgendes umfasst:
Empfangen (1005), auf einem Downlink von einer Netzwerkvorrichtung (102), einer oder mehrerer Steuernachrichten, die eine UL-Ressourcenzuteilungsgewährung und eine logische Kanalkonfiguration für mehr als einen logischen Kanal enthalten, wobei der mehr als eine logische Kanal zu einer logischen Kanalgruppe gehört, wobei die logische Kanalkonfiguration einen Prioritätswert für jeden logischen Kanal des mehr als einen logischen Kanals und ein Verhältnis für jeden des mehr als einen logischen Kanals beinhaltet;
Bestimmen (1010) einer Menge von multimodalem Verkehr, die in einem oder mehreren Uplink(UL)-Puffern für den mehr als einen logischen Kanal gepuffert wird, wobei der multimodale Verkehr voneinander abhängig ist und eine synchronisierte Kommunikation erfordert;
Zuweisen (1015), auf einer Medienzugriffssteuerungs(medium access control - MAC)-Schicht, von Ressourcen, die durch die UL-Ressourcenzuteilungsgewährung jedem des mehr als einen logischen Kanals zugeteilt wurden, gemäß dem Verhältnis, das jedem des mehr als einen logischen Kanals zugeordnet ist, und der bestimmten Menge von multimodalem Verkehr, die für den mehr als einen logischen Kanal gepuffert wird; und
Übertragen (1020), an die Netzwerkvorrichtung (102) unter Nutzung der UL-Ressourcenzuteilungsgewährung, eines gemultiplexten UL-Signals, das den multimodalen Verkehr des mehr als einen logischen Kanals enthält.

11. Verfahren nach Anspruch 10, Folgendes umfassend:
als Reaktion auf das Bestimmen, dass der eine oder die mehreren UL-Puffer den multimodalen Verkehr in dem mehr als einen logischen Kanal enthalten, Übertragen eines Pufferstatusberichts an die Netzwerkvorrichtung (102), wobei der Pufferstatusbericht eine Kapazität zum Multiplexen eines UL-Signals angibt; und
Zuweisen der durch die UL-Ressourcenzuteilungsgewährung zugeteilten Ressourcen als Reaktion auf das Empfangen der einen oder mehreren Steuernachrichten von der durch den Pufferstatusbericht aufgeforderten Netzwerkvorrichtung (102).

12. Verfahren nach Anspruch 11, wobei das Bestimmen, dass das UE (104, 800) den multimodalen Verkehr in dem einen oder den mehreren UL-Puffern puffert, das Identifizieren von Erweiterte-Realität(XR)-Trägern umfasst, die durch Funkressourcensteuerung(radio resource control - RRC)-Signalisierung konfiguriert sind.

13. Verfahren nach Anspruch 11, umfassend ein Zurückkehren zum Zuweisen von Verkehrsdaten zu einem UL-Signal gemäß einem Prioritätswert, der jedem der mehr als einen logischen Kanäle zugeordnet ist, als Reaktion auf das Bestimmen, dass der eine oder die mehreren UL-Puffer keinen multimodalen Verkehr mehr enthalten.

14. Verfahren, das durch eine Basisstation (102, 900) durchgeführt wird, wobei das Verfahren Folgendes umfasst:
Übertragen (1105), auf einem Downlink an ein Benutzergerät (UE) (104, 800), einer oder mehrerer Steuernachrichten, die eine Uplink(UL)-Ressourcenzuteilungsgewährung und eine logische Kanalkonfiguration für mehr als einen logischen Kanal enthalten,
wobei der mehr als eine logische Kanal zu einer logischen Kanalgruppe gehört, wobei die logische Kanalkonfiguration einen Prioritätswert für jeden logischen Kanal des mehr als einen logischen Kanals und ein Verhältnis für jeden des mehr als einen logischen Kanals beinhaltet, um das UE (104, 800) zu Folgendem aufzufordern:
Bestimmen einer Menge von multimodalem Verkehr, die in einem oder mehreren UL-Puffern für den mehr als einen logischen Kanal gepuffert wird, wobei der multimodale Verkehr voneinander abhängig ist und eine synchronisierte Kommunikation erfordert;
Zuweisen, auf einer Medienzugriffssteuerungs(medium access control - MAC)-Schicht, von Ressourcen, die durch die UL-Ressourcenzuteilungsgewährung jedem des mehr als einen logischen Kanals zugeteilt wurden, gemäß dem Verhältnis, das jedem des mehr als einen logischen Kanals zugeordnet ist, und der bestimmten Menge von multimodalem Verkehr, die für den mehr als einen logischen Kanal gepuffert wird; und
Empfangen (1110), von dem UE (104, 800) unter Nutzung der UL-Ressourcenzuteilungsgewährung, eines gemultiplexten UL-Signals, das den multimodalen Verkehr des mehr als einen logischen Kanals enthält.

15. Prozessor (806) für ein Benutzergerät (UE) (104, 800) für drahtlose Kommunikation, wobei der Prozessor (806) dazu konfiguriert ist, das UE (104, 800) zu Folgendem zu veranlassen:
Empfangen (1005), von einer Netzwerkvorrichtung (102), einer oder mehrerer Steuernachrichten, die eine Uplink(UL)-Ressourcenzuteilungsgewährung und eine logische Kanalkonfiguration für mehr als einen logischen Kanal enthalten, wobei der mehr als eine logische Kanal zu einer logischen Kanalgruppe gehört, wobei die logische Kanalkonfiguration einen Prioritätswert für jeden logischen Kanal des mehr als einen logischen Kanals und ein Verhältnis für jeden des mehr als einen logischen Kanals beinhaltet;
Bestimmen (1010) einer Menge von multimodalem Verkehr, die in einem oder mehreren UL-Puffern für den mehr als einen logischen Kanal gepuffert wird, wobei der multimodale Verkehr voneinander abhängig ist und eine synchronisierte Kommunikation erfordert;
Zuweisen (1015), auf einer Medienzugriffssteuerungs(medium access control - MAC)-Schicht, von Ressourcen, die durch die UL-Ressourcenzuteilungsgewährung jedem des mehr als einen logischen Kanals zugeteilt wurden, gemäß dem Verhältnis, das jedem des mehr als einen logischen Kanals zugeordnet ist, und der bestimmten Menge von multimodalem Verkehr, die für den mehr als einen logischen Kanal gepuffert wird; und
Übertragen (1020), an die Netzwerkvorrichtung (102) unter Nutzung der UL-Ressourcenzuteilungsgewährung, eines gemultiplexten UL-Signals, das den multimodalen Verkehr des mehr als einen logischen Kanals enthält.

## Revendications

1. Équipement utilisateur, UE, (104, 800) pour une communication sans fil, l'UE (104, 800) comprenant :
au moins une mémoire (808) ; et
au moins un processeur (806) couplé à l'au moins une mémoire (808) et configuré pour amener l'UE (104, 800) à :
recevoir (1005), en provenance d'un dispositif de réseau (102), un ou plusieurs messages de commande contenant un octroi d'allocation de ressources de liaison montante, UL, et une configuration de canaux logiques pour plus d'un canal logique, dans lequel le plus d'un canal logique appartient à un groupe de canaux logiques, la configuration de canaux logiques comprenant une valeur de priorité pour chaque canal logique parmi le plus d'un canal logique et un rapport pour chacun du plus d'un canal logique ;
déterminer (1010) une quantité de trafic multimodal mis en mémoire tampon dans un ou plusieurs tampons UL pour le plus d'un canal logique, le trafic multimodal étant interdépendant et nécessitant une communication synchronisée ;
attribuer (1015), au niveau d'une couche de commande d'accès au support, MAC, les ressources allouées par l'octroi d'allocation de ressources UL à chacun du plus d'un canal logique, en fonction du rapport associé à chacun du plus d'un canal logique et de la quantité déterminée de trafic multimodal mis en mémoire tampon pour le plus d'un canal logique ; et
transmettre (1020), au dispositif de réseau (102), en utilisant l'octroi d'allocation de ressources UL, un signal UL multiplexé contenant le trafic multimodal du plus d'un canal logique.

2. UE (104, 800) de la revendication 1, dans lequel l'au moins un processeur (806) est configuré pour amener l'UE (104, 800) à :
en réponse à la détermination que le ou les tampons UL contiennent le trafic multimodal dans le plus d'un canal logique, transmettre un rapport d'état de tampon au dispositif de réseau (102), le rapport d'état de tampon indiquant une capacité à multiplexer un signal UL ; et
attribuer les ressources allouées par l'octroi d'allocation de ressources UL en réponse à la réception du ou des messages de commande provenant du dispositif de réseau (102) incités par le rapport d'état de tampon.

3. UE (104, 800) de la revendication 2, dans lequel l'au moins un processeur (806) est configuré pour amener l'UE (104, 800) à déterminer que l'UE (104, 800) met en mémoire tampon le trafic multimodal dans le ou les tampons UL en identifiant des porteuses de réalité étendue, XR, configurées par une signalisation de commande de ressources radio, RRC.

4. UE (104, 800) de la revendication 2, dans lequel l'au moins un processeur (806) est configuré pour amener l'UE (104, 800) à revenir à l'attribution de données de trafic à un signal UL en fonction d'une valeur de priorité associée à chacun du plus d'un canal logique en réponse à la détermination que le ou les tampons UL ne contiennent plus de trafic multimodal.

5. Station de base (102, 900) pour une communication sans fil, la station de base (102, 900) comprenant :
au moins une mémoire (908) ; et
au moins un processeur (906) couplé à l'au moins une mémoire (908) et configuré pour amener la station de base (102, 900) à :
transmettre (1105), sur une liaison descendante, à un équipement utilisateur, UE, (104, 800), un ou plusieurs messages de commande contenant un octroi d'allocation de ressources de liaison montante, UL, et une configuration de canaux logiques pour plus d'un canal logique, dans lequel le plus d'un canal logique appartient à un groupe de canaux logiques, la configuration de canaux logiques comprenant une valeur de priorité pour chaque canal logique parmi le plus d'un canal logique et un rapport pour chacun du plus d'un canal logique afin d'inciter l'équipement utilisateur (104, 800) à :
déterminer une quantité de trafic multimodal mis en mémoire tampon dans un ou plusieurs tampons UL pour le plus d'un canal logique, le trafic multimodal étant interdépendant et nécessitant une communication synchronisée ;
attribuer, au niveau d'une couche de commande d'accès au support, MAC, les ressources allouées par l'octroi d'allocation de ressources UL à chacun du plus d'un canal logique, en fonction du rapport associé à chacun du plus d'un canal logique et de la quantité déterminée de trafic multimodal mis en mémoire tampon pour le plus d'un canal logique ; et
recevoir (1110), en provenance de l'UE (104, 800), en utilisant l'octroi d'allocation de ressources UL, un signal UL multiplexé contenant le trafic multimodal du plus d'un canal logique.

6. Station de base (102, 900) de la revendication 5, dans laquelle l'au moins un processeur (906) est configuré pour amener la station de base (102, 900) à :
recevoir, en provenance de l'UE (104, 800), un rapport d'état de tampon indiquant que le ou les tampons UL contiennent le trafic multimodal dans le plus d'un canal logique et une capacité à multiplexer un signal UL ; et
transmettre le ou les messages de commande pour configurer l'UE (104, 800) afin d'attribuer les ressources allouées par l'octroi d'allocation de ressources UL en réponse à la réception du rapport d'état de tampon.

7. Station de base (102, 900) de la revendication 5, dans laquelle l'au moins un processeur (906) est configuré pour amener la station de base (102, 900) à déterminer que l'UE (104, 800) met en mémoire tampon le trafic multimodal dans le ou les tampons UL en identifiant des porteuses de réalité étendue, XR, configurées par une signalisation de commande de ressources radio, RRC.

8. Station de base (102, 900) de la revendication 5, dans laquelle l'au moins un processeur (906) est configuré pour amener la station de base (102, 900) à transmettre un second ou plusieurs messages de commande pour configurer l'UE (104, 800) afin de revenir à l'attribution de données de trafic à un signal UL en fonction d'une valeur de priorité associée à chacun du plus d'un canal logique en réponse à la détermination que le ou les tampons UL de l'UE (104, 800) ne contiennent plus de trafic multimodal.

9. Station de base (102, 900) de la revendication 5, dans laquelle l'au moins un processeur (906) est configuré pour amener la station de base (102, 900) à transmettre des informations de commande de liaison descendante, DCI, dans le ou les messages de commande.

10. Procédé pour une communication sans fil, effectué par un équipement utilisateur, UE, (104, 800), le procédé comprenant :
la réception (1005), sur une liaison descendante, en provenance d'un dispositif de réseau (102), d'un ou plusieurs messages de commande contenant un octroi d'allocation de ressources UL et une configuration de canaux logiques pour plus d'un canal logique, dans lequel le plus d'un canal logique appartient à un groupe de canaux logiques, la configuration de canaux logiques comprenant une valeur de priorité pour chaque canal logique parmi le plus d'un canal logique et un rapport pour chacun du plus d'un canal logique ;
la détermination (1010) d'une quantité de trafic multimodal mis en mémoire tampon dans un ou plusieurs tampons de liaison montante, UL, pour le plus d'un canal logique, le trafic multimodal étant interdépendant et nécessitant une communication synchronisée ;
l'attribution (1015), au niveau d'une couche de commande d'accès au support, MAC, des ressources allouées par l'octroi d'allocation de ressources UL à chacun du plus d'un canal logique, en fonction du rapport associé à chacun du plus d'un canal logique et de la quantité déterminée de trafic multimodal mis en mémoire tampon pour le plus d'un canal logique ; et
la transmission (1020), au dispositif de réseau (102), en utilisant l'octroi d'allocation de ressources UL, d'un signal UL multiplexé contenant le trafic multimodal du plus d'un canal logique.

11. Procédé de la revendication 10, comprenant :
en réponse à la détermination que le ou les tampons UL contiennent le trafic multimodal dans le plus d'un canal logique, la transmission d'un rapport d'état de tampon au dispositif de réseau (102), le rapport d'état de tampon indiquant une capacité à multiplexer un signal UL ; et
l'attribution des ressources allouées par l'octroi d'allocation de ressources UL en réponse à la réception du ou des messages de commande provenant du dispositif de réseau (102) incités par le rapport d'état de tampon.

12. Procédé de la revendication 11, dans lequel la détermination que l'UE (104, 800) met en mémoire tampon le trafic multimodal dans le ou les tampons UL comprend l'identification de porteuses de réalité étendue, XR, configurées par une signalisation de commande de ressources radio, RRC.

13. Procédé de la revendication 11, comprenant le fait de revenir à l'attribution de données de trafic à un signal UL en fonction d'une valeur de priorité associée à chacun du plus d'un canal logique en réponse à la détermination que le ou les tampons UL ne contiennent plus de trafic multimodal.

14. Procédé mis en œuvre par une station de base (102, 900), le procédé comprenant :
la transmission (1105), sur une liaison descendante, à un équipement utilisateur, UE, (104, 800), d'un ou plusieurs messages de commande contenant un octroi d'allocation de ressources de liaison montante, UL, et une configuration de canaux logiques pour plus d'un canal logique, dans lequel le plus d'un canal logique appartient à un groupe de canaux logiques, la configuration de canaux logiques comprenant une valeur de priorité pour chaque canal logique parmi le plus d'un canal logique et un rapport pour chacun du plus d'un canal logique afin d'inciter l'UE (104, 800) à :
déterminer une quantité de trafic multimodal mis en mémoire tampon dans un ou plusieurs tampons UL pour le plus d'un canal logique, le trafic multimodal étant interdépendant et nécessitant une communication synchronisée ;
attribuer, au niveau d'une couche de commande d'accès au support, MAC, les ressources allouées par l'octroi d'allocation de ressources UL à chacun du plus d'un canal logique, en fonction du rapport associé à chacun du plus d'un canal logique et de la quantité déterminée de trafic multimodal mis en mémoire tampon pour le plus d'un canal logique ; et
recevoir (1110), en provenance de l'UE (104, 800), en utilisant l'octroi d'allocation de ressources UL, un signal UL multiplexé contenant le trafic multimodal du plus d'un canal logique.

15. Processeur (806) pour un équipement utilisateur, UE, (104, 800) pour une communication sans fil, le processeur (806) étant configuré pour amener l'UE (104, 800) à :
recevoir (1005), en provenance d'un dispositif de réseau (102), un ou plusieurs messages de commande contenant un octroi d'allocation de ressources de liaison montante, UL, et une configuration de canaux logiques pour plus d'un canal logique, dans lequel le plus d'un canal logique appartient à un groupe de canaux logiques, la configuration de canaux logiques comprenant une valeur de priorité pour chaque canal logique parmi le plus d'un canal logique et un rapport pour chacun du plus d'un canal logique ;
déterminer (1010) une quantité de trafic multimodal mis en mémoire tampon dans un ou plusieurs tampons UL pour le plus d'un canal logique, le trafic multimodal étant interdépendant et nécessitant une communication synchronisée ;
attribuer (1015), au niveau d'une couche de commande d'accès au support, MAC, les ressources allouées par l'octroi d'allocation de ressources UL à chacun du plus d'un canal logique, en fonction du rapport associé à chacun du plus d'un canal logique et de la quantité déterminée de trafic multimodal mis en mémoire tampon pour le plus d'un canal logique ; et
transmettre (1020), au dispositif de réseau (102), en utilisant l'octroi d'allocation de ressources UL, un signal UL multiplexé contenant le trafic multimodal du plus d'un canal logique.
